# EUROPÄISCHE PATENTSCHRIFT

(11) **EP 1 907 253 B1**
(45) Veröffentlichungstag und Bekanntmachung des Hinweises auf die Patenterteilung: **17.07.2013**
(21) Anmeldenummer: 06724474.9
(22) Anmeldetag: 20.04.2006
(51) Int. Cl.: B60T 8/44, B60T 13/74

(54) **BREMSSYSTEM MIT ELEKTROMOTORISCH ANGETRIEBENEM KOLBENZYLINDER SYSTEM**
BRAKE SYSTEM WITH ELECTROMOTIVELY DRIVEN PISTON/CYLINDER SYSTEM
SYSTEME DE FREINAGE POURVU D'UN SYSTEME PISTON-CYLINDRE A ENTRAINEMENT PAR MOTEUR ELECTRIQUE

(30) Priorität: 21.04.2005 DE 102005018649
(43) Veröffentlichungstag der Anmeldung: 09.04.2008
(73) Patentinhaber: IPGATE AG, 8808 Pfäffikon SZ (CH)
(72) Erfinder: LEIBER, Heinz, D-71739 Oberriexingen (DE); LEIBER, Thomas, D-81925 München (DE)
(74) Vertreter: Lenzing Gerber Stute
(86) Internationale Anmeldenummer: PCT/EP2006/003647
(87) Internationale Veröffentlichungsnummer: WO 2006/111392

(56) Entgegenhaltungen:
- WO-A-2004/005095
- DE-A1- 3 241 662
- DE-A1- 4 239 386
- DE-A1- 4 445 975
- DE-A1- 19 750 977
- US-A- 4 057 301
- US-A- 6 079 792
- US-A1- 2003 160 503
- US-B1- 6 315 371

## Beschreibung

Die vorliegende Erfindung betrifft eine Bremsanlage, eine Betätigungseinrichtung, insbesondere ein Bremspedal, und eine Steuer- und Regeleinrichtung aufweisend, wobei die Steuer- und Regeleinrichtung anhand der Bewegung und/oder Position der Betätigungseinrichtung eine elektromotorische Antriebsvorrichtung steuert, wobei die Antriebsvorrichtung einen Kolben eines Kolben-Zylinder-Systems über eine nicht-hydraulische Getriebevorrichtung verstellt, so dass sich im Arbeitsraum des Zylinders ein Druck einstellt, wobei der Arbeitsraum über eine Druckleitung mit einer Radbremse in Verbindung ist.

### Stand der Technik:

Moderne Bremsanlagen bestehen aus Bremskraftverstärkung, d. h. Umsetzung der Pedalkraft in ein entsprechendes verstärktes Bremsmoment an den Radbremsen und Bremskraftregelung über offene oder geschlossene Regel- und Steuerkreise. Als Übertragungsmittel zur Erzeugung des Bremsdruckes aus der Pedalkraft wird bis auf wenige Ausnahmen im PKW-Bereich die hydraulische Leitung eingesetzt.

Weit verbreitet ist eine Aufteilung in Baueinheiten zwischen Bremskraftverstärkung (BKV) oder Bremskraftsteuerung und Bremskraftregelung in einer Hydraulikeinheit (HE). Diese Konfiguration wird vorwiegend eingesetzt bei Systemen wie Antiblockiersystem (ABS), Antischlupfsystem (ASR), Elektronisches Stabilitätsprogramm (ESP) oder auch elektrohydraulischer Bremse (EHB).

Die Hydraulikeinheit (HE) besteht aus Magnetventilen, Mehrkolbenpumpen für 2-Kreis-Bremssyteme, Elektromotor zum Pumpenantrieb, hydraulischem Speicher und mehreren Druckgebern. Die Druckregelung erfolgt in der Weise, dass zur Bremsmomentreduzierung Druckmittel über Magnetventile aus den Radbremsen in einen Speicher abgelassen wird und von der Pumpe in den Hauptbremszylinder zurückgepumpt wird, was eine Pedalbewegung bewirkt. Sowohl Druckanstieg als auch -abfall wird über Magnetventile gesteuert, bei der teilweise Druckgeber für die Magnetventilsteuerung verwendet werden. Außer bei der EHB erfolgt die Bremskraftverstärkung mit dem Vakuum-BKV, welcher teilweise Schaltmittel und Sensoren beinhaltet zur sog. Bremsassistentfunktion und auch zur Erkennung des sog. Ansteuerpunktes. Als Energiequelle für das Vakuum wird bei Ottomotoren der Verbrennungsmotor genutzt, der aber als Direkteinspritzer, insbesondere bei größerer Höhe, nur noch ein schwaches Vakuum liefert. Bei Dieselmotoren wird eine mechanische oder elektrisch angetriebene Vakuumpumpe eingesetzt. Neueste ESP-Systeme sind in der Lage, durch Schaltung der Magnetventile und Pumpe eine zusätzliche Bremskraftverstärkung oder bei Ausfall des BKV eine Bremskraftverstärkung mit größerer Zeitkonstante zu erzielen. Die Beschreibung dieser Systeme und Funktionen ist ausführlich im Bremsenhandbuch Vieweg Verlag, Ausgabe 2003, beschrieben.

Mitte der 1980er Jahre wurde von Teves das sog. Mark II und von Bosch das ABS3 eingesetzt, welche als integrierte Einheiten alle Komponenten für Bremskraftverstärkung und Regelung beinhalteten mit hydraulischem BKV, s. Kraftfahrtechnisches Handbuch Bosch 1986, 20. Auflage. Aus Kostengründen haben sich diese Systeme nicht durchgesetzt, bis auf die Anwendung bei Sonderschutzfahrzeugen. Dasselbe gilt für voll elektrische Bremssysteme, sog. EMB, mit E-Motoren an den Radbremsen, die intensiv in Verbindung mit dem 42-V-Bordnetz entwickelt wurden. Neben den Mehrkosten ist hier ein neues redundantes Bordnetz für die Energieversorgung notwendig, um im Fehlerfall die Bremsfähigkeit eines Bremskreises sicherzustellen.

Zur Gattung der EMB-Systeme zählt auch die Keilbremse mit elektromotorischem Antrieb. Hierfür ist ebenfalls ein redundantes Bordnetz trotz des geringeren Energiebedarfes notwendig. Die konstruktive Realisierung der Keilbremse, welche aus Hysteresegründen zusätzliche Rollen benötigt, welche eine Integration in den Bremssattel erfordern, ist im Augenblick nicht gelöst. Die Keilbremse mit ihren elektromotorischen Antrieben mit Sensoren muss den harten Umgebungsbedingungen (Staub, Wasser, hohe Temperaturen) standhalten.

Die Systeme für BKV und HE sind sehr weit entwickelt, insbesondere die Steuer- und Regelfunktionen für ABS bis ESP. Z. B. ist durch die druckgeführte Steuerung der Magnetventile eine sehr feine Dosierung des Bremsdruckes möglich, mit dem auch eine variable Bremskraftabstimmung EBV möglich ist. Die Druckabbaugeschwindigkeit ist noch nicht optimal, da sie stark nichtlinear ist. Außerdem wird bei einem µ-Sprung oder bei kleinem Reibbeiwert die Druckabbaugeschwingkeit durch die relative geringe Pumpleistung bestimmt, was zu großen Regelabweichungen führt und damit einen Bremswegverlust zur Folge hat.

Ein gattungemäßes Bremssystem ist aus der DE 3342552 bekannt. Bei diesem Bremssystem dient der Hauptbremszylinder zur Erzeugung eines pedalabhängigen Drucks, der als Führungsgröße für eine elektronische Steuer- und Regeleinrichtung dient, welche den Ausgangsdruck einer unmittelbar mit dem Bremskreis verbundenen elektrohydraulischen Servoeinrichtung auf einen durch die Führungsgröße bestimmten Wert regelt. Bei Ausfall der Regeleinrichtung oder der Servoeinrichtung selbst wird der Druck im Bremskreis vom Hauptzylinder erzeugt. Anstelle der im Normalbetrieb mittels des Hauptbremszylinders erzeugten Führungsgröße, ist es möglich, eine im Rahmen eines Antiblockiersystems oder im Rahmen einer Schlupfregelung der Antriebsregelung des Kraftfahrzeuges erzeugte Führungsgröße auf die elektronische Steuer- und Regeleinrichtung und somit auf die elektrohydraulische Servoeinrichtung einwirken lassen. Die Servoeinrichtung weist eine elektrisch betätigte hydraulische Kolben-Zylinder-Einheit auf, deren Arbeitsraum mit dem Bremskreis in Verbindung steht und deren Kolben mittels eines Elektromotors axial verstellbar ist. Die Drehbewegung des Elektromotors wird dabei über eine mit dem Kolben verbundene Spindel in eine Längsbewegung des Kolbens umgesetzt.

Die DE 1940632 A1 offenbart ein Bremssystem, bei dem ein Elektromagnet den Kolben eines Kolbenzylindersystems zum Druckauf- und Druckabbau in einer Radbremse verstellt. Dabei sind die beiden Hauptzylinder über Druckleitungen bzw. Bremskreise jeweils mit zwei Radbremszylindern verbunden. Die beiden Kolben der beiden Hauptbremszylinder sind jeweils mittels Stangen fest mit Ankern von Elektromagneten verbunden. Die Anker sind ihrerseits jeweils mit einem freien Ende einer Traverse verbunden, welche von dem Bremspedal verstellt wird. Zur Kraftunterstützung werden die Elektromagnete entsprechend bestromt. Zur Beschleunigung des Druckabbaus in den jeweiligen Radbremsen können die normal als Zugmagnete arbeitenden Elektromagnete umgepolt werden.

Die DE 3723916 A1 zeigt eine Bremsanlage mit einem hydraulischen Bremskraftverstärker, welcher neben der reinen Bremskraftverstärkung auch die ABS-Funktion realisiert. In der Druckleitung, welche das Kolbenzylindersystem und die jeweilige Radbremse verbindet ist jeweils nur ein Ventil angeordnet, welches zum Ändern des Druckes in der Radbremse geöffnet und zum Halten des Radbremsendruckes geschlossen ist.

Aus DE 19503137 C1 ist eine Betätigungsvorrichtung für ein Fahrzeug vorbekannt, bei dem ein Motor über ein Zahnrad eine Zahnstange verstellt, welche mit einem Kolben in Verbindung ist.

Aus WO2004/005095 A1 ist eine Bremsanlage vorbekannt, bei der ein Elektromotor über einen Spindelantrieb die Kolben eines Kolbenzylindersystems antreibt. Die Kolben sind dabei nicht mit der Spindel fest gekoppelt, so dass die maximale Kolbengeschwindigkeit beim Zurückfahren der Spindel und damit die maximale Druckabbaugeschwindigkeit von der Stärke der Druckfedern im Kolbenzylindersystem bestimmt ist.

### Aufgabe der Erfindung

Die vorliegende Erfindung hat die Aufgabe, ein neuartige Bremsanlage bereitzustellen, die klein und kompakt in ihren Abmessungen ist.

Diese Aufgabe wird vorteilhaft durch eine Bremsanlage mit den Merkmalen des Anspruch 1 gelöst. Weitere vorteilhafte Ausgestaltungen der Bremsanlage nach Anspruch 1 ergeben sich durch die Merkmale der Unteransprüche.

Das erfindungsgemäße Bremssystem zeichnet sich vorteilhaft dadurch aus, dass es die Bremskraftverstärkung und die Servoeinrichtung auf kleinsten Raum pro Bremskreis mittels lediglich einer Kolben-Zylinder-Einheit realisiert. Die Kolben-Zylinder-Einheit dient gleichsam für den Bremsdruckaufbau und Bremsdruckabbau, zur Realisierung der ABS- und Antischlupfregelung sowie bei Ausfall der Energieversorgung oder Fehlfunktion der Antriebsvorrichtung. Somit ergibt sich vorteilhaft eine kleine integrierte und kostengünstige Baueinheit für die Bremskraftverstärkung (BKV) und Regelung, womit eine Einsparung von Bauraum, Montagekosten und zusätzlichen hydraulischen und Vakuum-Verbindungsleitungen einhergeht. Zudem wirkt aufgrund der kurzen Baulänge, vorteilhaft z.B. der Federdom bei einem Frontcrash nicht auf den Hauptzylinder und das Pedalwerk ein.

Durch das vorteilhafte Vorsehen einer Sensorik sowie eines Wegsimulators, kann eine variable Pedalcharakteristik wie Brake-bywire-Funktion, d.h. Bremsdruckanstieg unabhängig von Pedalbetätigung frei variabel, auch unter Berücksichtigung der Bremswirkung des Generators bei rekuperierbaren Bremsen, eingeregelt werden. Ferner erfolgt bei der entsprechenden Ausführung kein nachteiliges Durchfallen des Bremspedals bei Ausfall des Antriebs, da das Pedal direkt auf den Kolben des Systems wirkt. Vorteilhaft ergeben sich hierdurch gleichfalls geringere Pedalkräfte bei Ausfall der Energieversorgung, da die Kolben eine kleinere Wirkfläche haben als konventionelle Hauptbremszylinder. Dies ist möglich durch Trennung des Kolbenweges bei intakter und ausgefallener Verstärkung. Man spricht hier von einem Übersetzungssprung, der die Pedalkraft für dieselbe Bremswirkung um bis zu 40 % reduziert. Durch die Reduzierung des Gesamtaufwandes einschließlich der elektrischen Anschlüsse, ergibt sich zudem vorteilhaft eine Reduzierung der Ausfallrate.

Durch den elektromotorischen Antrieb ist weiterhin eine Verbesserung der ABS/ESP Regelung durch fein dosierte Drucksteuerung mit variablen Druckanstiegs- und insbesondere Druckabfallgeschwindigkeiten realisierbar. Auch ist eine Druckabsenkung unter 1 bar im Bereich des Vakuums für Funktion bei kleinsten Reibkraftbeiwerten, z. B. nassem Eis, möglich. Ebenso ist ein schneller Druckanstieg bei Bremsbeginn z.B. 0 - 100 bar in weniger als 50 ms erzielbar, was eine erhebliche Bremswegverkürzung zur Folge hat.

Durch das vorteilhafte Vorsehen eines 2/2-Wegeventils für die Bremskraftverstärkung und die Regelfunktion benötigt die erfindungsgemäße Bremsanlage erheblich weniger Energie.

Es ist ferner möglich, für jeden Bremskreis oder jede Radbremse ein eigenes Kolben-Zylinder-System mit jeweils dazugehörigem Antrieb vorzusehen. Ebenso ist es möglich, ein Kolben-Zylinder-System zu verwenden, bei dem zwei Kolben in einem Zylinder axial verschieblich angeordnet sind, wobei die Zylinder hydraulisch gekoppelt sind und lediglich ein Kolben mechanisch von der Antriebsvorrichtung elektromotorisch angetrieben ist.

Nachfolgend werden verschiedene Ausgestaltungen der erfindungsgemäßen Bremsanlage anhand von Zeichnungen näher erläutert.

Es zeigen:
- Fig.1:: Eine erste Ausführungsform einer Bremsanlage mit einem Bremskreis für zwei Radbremsen, die sich von derjenigen gemäß der Erfindung unterscheidet;
- Fig. 2:: eine zweite Ausführungsform der Bremsanlage mit zwei Kolben-Zylinder-Systemen für zwei Bremskreise für jeweils zwei Radbremsen, die sich von derjenigen gemäß der Erfindung unterscheidet;
- Fig. 3:: einen Wegsimulator für ein Bremssystem, das sich von demjenigen gemäß der Erfindung unterscheidet;
- Fig. 4 und 4a:: ein Kolben-Zylinder-System mit einem Zylinder und zwei Kolben für ein Bremssystem, das sich von demjenigen gemäß der Erfindung unterscheidet;
- Fig. 5 und 5a:: Verbindung zwischen Betätigungseinrichtung und Kolben-Zylinder-Systemen, welche sich von derjenigen gemäß der Erfindung unterscheidet;
- Fig. 6:: eine Seitenansicht der integrierten Baueinheit mit Gehäuse, welche sich von derjenigen gemäß der Erfindung unterscheidet;
- Fig. 7:: Kennlinien des Bremssystems;
- Fig. 8 und 8a:: Kolbenantrieb über eine Kurbelschwinge, welcher sich von demjenigen gemäß der Erfindung unterscheidet;
- Fig. 9:: Kolbenantrieb über eine Spindel
- Fig. 10:: Kolbenbetätigung mit überlagerter Pedalkraft
- Fig. 11 und 11a:: die Fixierung der Spindelmutter der Fig. 9 im Detail

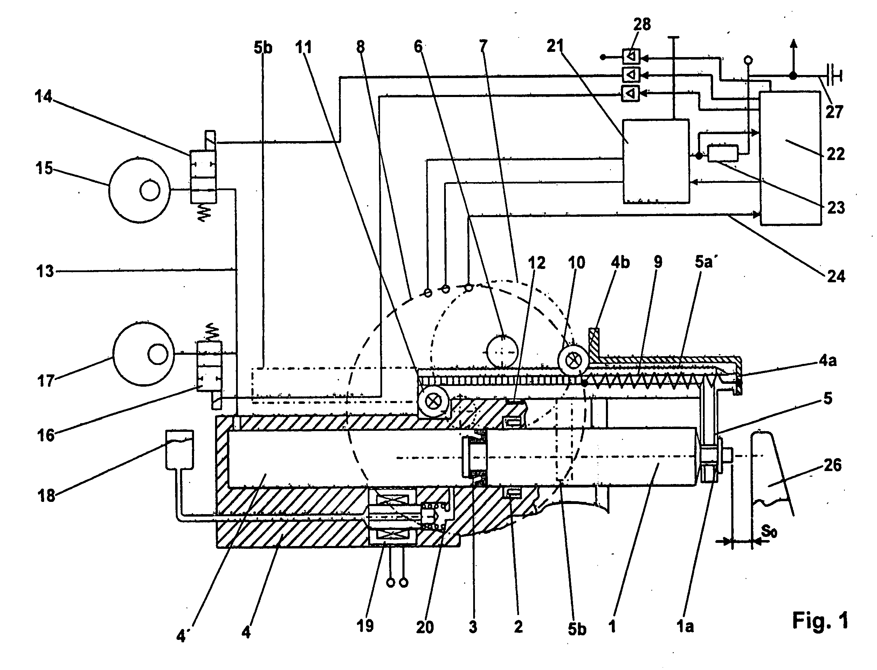

Im Folgenden werden anhand der Figuren 1 bis 6 sowie der Figuren 8 und 8a der Erfindung nicht entsprechende Bremsanlagen beschrieben. Die Beschreibung dieser Bremsanlagen dient zur anschließenden Darstellung der Erfindung und erlaubt ein besseres Verständnis der Erfindung.

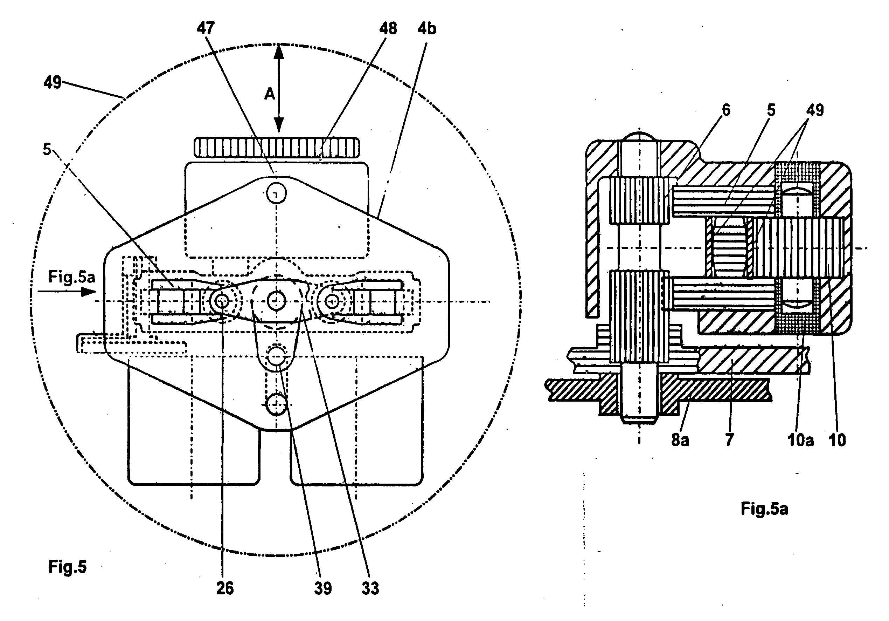

Die Fig. 1 zeigt einen Ausschnitt aus der integrierten Einheit, die für die Druckerzeugung bzw. Bremskraftverstärkung zuständig ist. Hierbei wird der Kolben 1 mit den üblichen Dichtungen 2 und 3 im Zylindergehäuse 4 parallel zum Kolben über eine speziell gestaltete Zahnstange 5a bewegt. Die Dichtung 2 ist so konzipiert, dass sie auch bei Unterdruck in der Kolbenkammer 4' abdichtet. Diese Zahnstange 5a überträgt die Kraft auf das vordere ballige Ende des Kolbens 1. Dieser hat an dieser Stelle einen Bundbolzen 1a, über den die Zahnstange 5a mit Rückstellfeder 9 den Kolben in die Ausgangsstellung bringt. Hier liegt die Zahnstange am Zylindergehäuse 4a an. Diese außenliegende Feder hat den Vorteil, dass der Zylinder kurz baut und wenig Totraum hat, was für die Entlüftung vorteilhaft ist. Die Zahnstange hat wegen der Querkräfte eine Lagerung in den Rollen 10 und 11 mit Gleitstück 12. Die Figur 1 zeigt deutlich, dass die parallele Anordnung der Zahnstange zum Kolben eine kurze Baulänge bewirkt. Die Baueinheit muss sehr kurz bauen, um außerhalb der Crashzone zu sein. Die Zahnstange ist durch ein in Fig. 5a dargestelltes H-Profil sehr biegesteif. Die Anordnung der Rollen ist so gewählt, dass die Zahnstange in der Endstellung 5b (gestrichelt dargestellt) mit der größten Biegekraft durch die versetzt angreifende Druckkraft eine relativ kleine Biegelänge hat. Die Zahnstange wird über Zahnprofil 5a' und Zahnrad 6 über das Getrieberad 7 vom Ritzel des Motors 8 angetrieben. Dieser Motor mit kleiner Zeitkonstante ist vorzugsweise ein bürstenloser Motor als Glockenläufer mit eisenloser Wicklung oder vorzugsweise ein Motor entsprechend der PCT-Patentanmeldungen PCT/EP2005/002440 und PCT/EP2005/002441. Dieser wird von den Endstufen 21 vorzugsweise über drei Stränge von einem Microcontroller (MC) 22 gesteuert. Hierfür misst ein Shunt 23 den Strom und ein Sensorsignal 24 und gibt die Position des Rotors und über entsprechende Zähler die Position des Kolbens an. Die Strom- und Positionsmessung wird neben der Motorsteuerung zur indirekten Druckmessung genutzt, da das Motormoment proportional zur Druckkraft ist. Hierfür muss im Fahrzeug bei Inbetriebnahme und auch während des Betriebs ein Kennfeld angelegt werden, in dem den verschiedenen Stromstärken die Position des Kolbens zugeordnet wird. Im Betrieb wird dann entsprechend der später beschriebenen Verstärkerkennlinie eine Position des Kolbens angefahren, die entsprechend dem Kennfeld einem bestimmten Druck entspricht. Stimmen Position und Motormoment nicht ganz überein, z. B. durch Temperatureinfluss, so wird das Kennfeld im Betrieb adaptiert. Dadurch wird das Kennfeld laufend adaptiert. Das Ausgangskennfeld wird gebildet aus vorzugsweise Druck-Volumen-Kennlinie der Radbremse, Motorkennwert, Getriebewirkungsgrad und Fahrzeugverzögerung. Mit letzterer kann eine pedalkraftproportionale Fahrzeugverzögerung erreicht werden, damit sich der Fahrer nicht auf unterschiedliche Bremswirkungen einstellen muss.

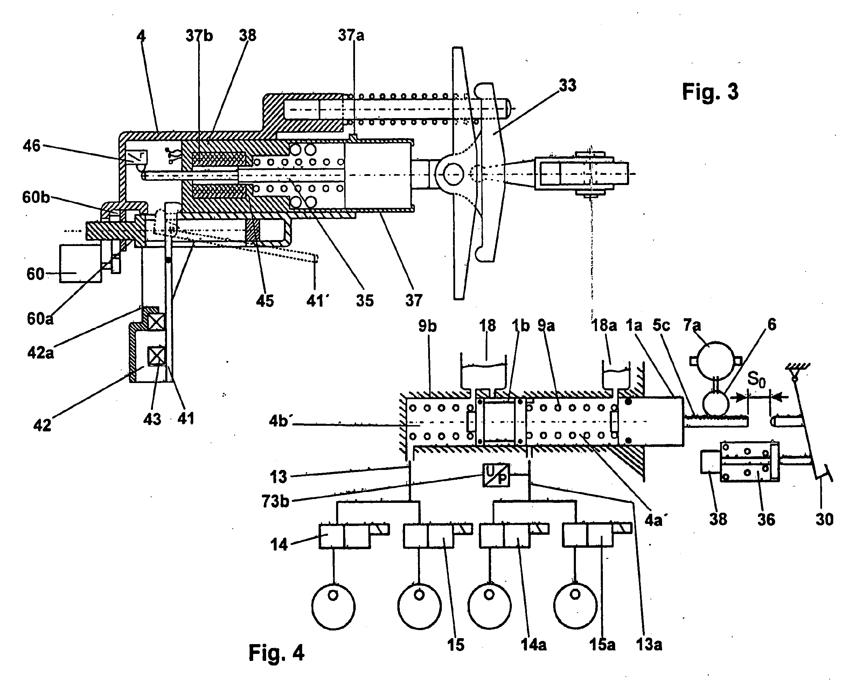

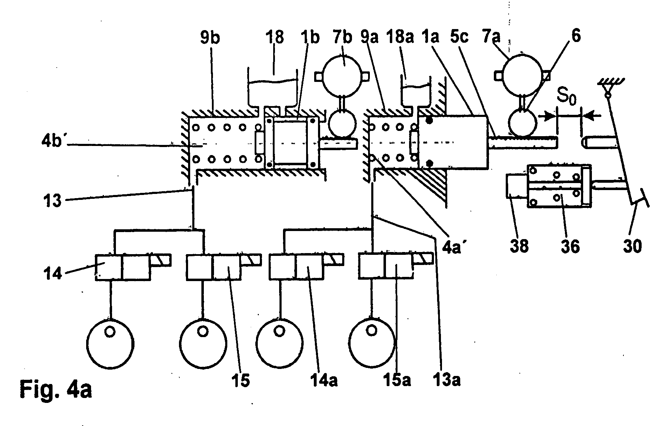

Der Kolben 1 erzeugt in der Leitung 13 einen entsprechenden Druck, der über das 2/2-Magnetventil (MV) 14 zur Radbremse 15 bzw. über Magnetventil MV 16 zur Radbremse 17 gelangt. Diese vorbeschriebene Anordnung hat mehrere Vorteile. Anstelle der zwei kostengünstigen kleinen Magnetventile könnte eine weitere Kolben-Motoreinheit eingesetzt werden wie sie in Fig. 4 dargestellt ist. Dies bedeutet jedoch erheblich mehr Kosten, Gewicht und Bauraum.

Es genügt, für jeden Bremskreis eine Kolben-Motoreinheit einzusetzen.

Der zweite Vorteil ist der sehr kleine Energiebedarf und auch die Auslegung des Motors nur für Impulsbetrieb. Dieser wird erreicht, indem bei Erreichen des Sollwertes des Druckes bzw. Motormoments die Magnetventile geschlossen werden und der Motor anschließend nur noch mit geringer Stromstärke betrieben wird, bis vom Bremspedal ein neuer Sollwert vorgegeben wird. Damit wird der Energiebedarf bzw. die mittlere Leistung extrem klein. Z.B. würde bei einer herkömmlichen Auslegung bei einer Vollbremsung aus 100 km/h der Motor 3 einen hohen Strom aufnehmen. Entsprechend der Erfindung benötigt der Motor für den Kolbenweg nur ca. 0,05 s Strom, was 1,7 % ausmacht. Wenn die Werte auf die Leistung bezogen werden, so würde im herkömmlichen Fall das Bordnetz mit >1000 W über mindestens 3 s belastet und beim vorgeschlagenen Impulsbetrieb nur ca. 50 W mittlerer Leistung. Eine noch größere Energieeinsparung ergibt sich bei einer Vollbremsung aus 250 km/h mit Bremszeiten bis zu 10 s auf trockener Straße. Zur Entlastung der Impulsbelastung des Bordnetzes kann hier ein Speicherkondensator 27 in der Stromversorgung verwendet werden, der auch entsprechend der Linie mit Pfeil für die weiteren Elektromotoren verwendet werden kann.

In der Druckleitung 13 können vor oder nach dem Magnetventil Druckgeber eingesetzt werden, welche nicht dargestellt sind, da diese dem Stand der Technik entsprechen.

Der Kolben 1 wird über das Schnüffelloch mit Flüssigkeit aus dem Vorratsbehälter 18 versorgt. In dieser Leitung ist ein Magnetventil 19 eingeschaltet. Erfolgt eine schnelle Kolbenbewegung zur Druckreduzierung, so könnte die Dichtung 3 insbesondere bei kleinen Drücken Flüssigkeit aus dem Vorratsbehälter nachschnüffeln, was bekannter weise nachteilig ist. Hierzu wird das Niederdruck-Magnetventil 19 eingeschaltet und die Verbindung zum Vorratsbehälter unterbrochen. Mit dieser Schaltung kann auch Unterdruck in den Radkreisen 15/17 erzielt werden, was der Radregelung bei sehr kleinen Reibbeiwerten z. B. auf nassem Eis zugutekommt, da in der Radbremse kein Bremsmoment erzeugt wird. Andererseits kann das Nachschnüffeln bei Dampfblasenbildung bewusst genutzt werden, bei der der Kolben bereits am Anschlag ist ohne dass der entsprechende Druck erreicht ist. Hierbei werden die Kolben mit den Magnetventilen entsprechend gesteuert, so dass der oszillierende Kolben Druck aufbaut. Beim Verzicht auf diese Funktion kann an Stelle des Magnetventils 19 eine schnüffelfeste Dichtung 3 eingesetzt werden.

Die Magnetventile 14, 16, 19 werden über Endstufen 28 vom Mikrocontroller 22 gesteuert.

Bei Ausfall der Energieversorgung oder des Elektromotors wird der Kolben von einem Hebel 26 der Betätigungseinrichtung bewegt. Zwischen diesem und dem Kolben ist ein Spiel eingebaut, das verhindert, dass bei schneller Pedalbetätigung der Hebel auf den Kolben auftrifft, bevor der Motor den Kolben bewegt.

Die Regelfunktion bezüglich Radgeschwindigkeit und Raddruck bei ABS / ASR oder Gierrate und Raddruck bei ESP wurde in verschiedenen Publikationen dargestellt, so dass auf eine erneute Beschreibung verzichtet wird.

In einer Tabelle sollen die wesentlichen Funktionen des neuen Systems gezeigt werden:

| **Funktionen** | Elektromotor | Druck in Radbremse 15 | Magnetventil 14 0 = geöffnet 1 = geschlossen | Druck in Radbremse 17 | Magnetventil 15 0 = geöffnet 1 = geschlossen |
|---|---|---|---|---|---|
| **BKV** | Ein | Aufbau | 0 | Aufbau | 0 |
| | teilbestromt | P = konstant | 1 | P = konstant | 1 |
| | teilbestromt | Abbau | 0 | Abbau | 0 |
| **Bremsregelung** | Ein | Aufbau | 0 | Aufbau | 0 |
| | teilbestromt | P = konstant | 1 | P = konstant | 0 |
| | Ein | Aufbau | 0 | P = konstant | 1 |
| | teilbestromt | Abbau | 0 | P = konstant | 1 |
| | teilbestromt | Abbau | 0 | Abbau | 0 |

Die Höhe der Teilbestromung richtet sich nach der von dem BKV oder der Bremsregelung gewünschten Druckanstiegs- oder Abbaugeschwindigkeit. Entscheidend ist hierfür eine extrem kleine Zeitkonstante des Elektromotors, d. h. ein zeitlich schneller Momentanstieg und Momentreduzierung über kleine bewegliche Massen des gesamten Antriebs, da die Kolbengeschwindigkeit die Druckänderungsgeschwindigkeit bestimmt. Zusätzlich ist für eine Bremsregelung eine schnelle und genaue Positionsregelung der Kolben notwendig. Bei der schnellen Momentenreduzierung wirkt zusätzlich die von dem Bremssattel herrührende Druckkraft unterstützend, welche aber bei kleinen Drücken gering ist. Aber gerade hier soll auch die Druckabfallgeschwindigkeit groß sein, um große Regelabweichungen von der Radgeschwindigkeit auf z. B. Eis zu vermeiden.

Bei diesem Konzept besteht ein entscheidender Vorteil gegenüber der herkömmlichen Drucksteuerung über Magnetventile, da die Kolbengeschwindigkeit die Druckänderungsgeschwindigkeit bestimmt. Z. B. ist bei kleinem Differenzdruck am Druckabbau bestimmenden Auslassventil der Durchfluss und damit die Druckabsenkungsgeschwindigkeit gering. Die Kolbeneinheit kann wie bereits erwähnt für jedes Rad getrennt mit und ohne Magnetventil eingesetzt werden. Um die Vorteile des geringen Energieverbrauches zu nutzen, müsste der Elektromotor mit einer schnellen elektromagnetischen Bremse erweitert werden, welche aber aufwändiger ist. Die gezeigte Ausführung mit einer Kolbeneinheit und zwei Magnetventilen ist vom Bauraum und den Kosten her zu bevorzugen. Regelungstechnisch gilt jedoch hier die Einschränkung, dass bei einem Druckabbau an einem Rad das andere Rad keinen Druck aufbauen kann. Da jedoch die Druckabbauzeit ca. < 10 % der Druckaufbauzeit im Regelzyklus beträgt, ist diese Einschränkung ohne nennenswerten Nachteil. Die Regelalgorithmen müssen entsprechend angepasst werden z.B. muss nach einer Phase konstanten Drucks von Öffnung des Magnetventils der Elektromotor mit einem Strom erregt werden, dem der passende Druck in der Radbremse gemäß der BKV-Kennlinie zugeordnet ist oder z.B. 20% höher ist als der vorausgegangene Blockierdruck im Regelzyklus. Alternativ kann z.B. auch während der Regelung ein adaptives Druckniveau eingesteuert werden, welches 20 % höher liegt als der höchste Blockierdruck der Achse oder des Fahrzeugs. Als Blockierdruck gilt der Druck, bei dem das Rad instabil in größerem Schlupf läuft.

Das Konzept bietet zusätzlich regelungstechnisch neue Möglichkeiten zur Druckabsenkung. Regelungstechnisch gilt, dass die Druckabsenkung und Bremsmomentreduzierung im Wesentlichen proportional zur Drehbeschleunigung des Rades, der Hysterese der Dichtung und umgekehrt proportional zum Trägheitsmoment des Rades sind. Aus diesen Werten kann jeweils der Betrag der erforderlichen Druckabsenkung berechnet werden und der Kolben kann bei geschlossenen MV bereits das entsprechende Volumen unter Berücksichtigung des beschriebenen Kennfeldes bereitstellen. Wenn dann das MV öffnet, erfolgt eine sehr schnelle Druckabsenkung praktisch in das Vakuum. Hierbei wird zugrunde gelegt, dass das MV durch entsprechende Öffnungsquerschnitte im Gegensatz zu heutigen Lösungen eine kleinere Drosselwirkung besitzt. Hierbei kann der Druckabbau schneller als bei konventionellen Lösungen über ein speziell bereitgestelltes Kammervolumen entsprechend der Druckvolumenkennlinie erfolgen. Alternativ ist eine Druckabsenkung in ein Kammervolumen, welches geringfügig größer als der notwendige Druckabbau ist, möglich, z.B. durch entsprechende Verstellgeschwindigkeit des Kolbens. Zur genauen Regelung des Druckabbaus ist hier eine sehr kleine Schaltzeit zum Schließen des Magnetventils notwendig, was vorzugsweise durch Vorerregung und/oder Übererregung gelöst werden kann. Außerdem ist es für Spezialfälle der Regelung vorteilhaft, Magnetanker des 2/2 Magnetventils über bekannte PWM-Verfahren in eine Zwischenstellung zu bringen, um eine Drosselwirkung zu erzeugen.

Der sehr schnelle Druckabbau kann möglicherweise Druckschwingungen erzeugen, die auf das Rad zurückwirken. Um diese schädliche Wirkung zu vermeiden, kann der Kolbenweg als weitere Alternative entsprechend, z.B. 80% des erforderlichen Druckabbaus angesteuert werden (schneller Druckabbau). Die restlichen erforderlichen 20% des Druckabbaus können dann durch eine anschließend gesteuerte langsame Kolbenbewegung langsam geschehen oder bei der Alternative mit der Druckabbausteuerung über Magnetventile durch Taktung des Magnetventils und gestuften Abbau. So werden schädliche Radschwingungen vermieden. Der langsame Druckabbau kann so lange fortgesetzt werden, bis das Rad bei der ABS-Regelung wieder beschleunigt.

Damit sind sehr kleine Regelabweichungen der Radgeschwindigkeit möglich. Sinngemäß kann die oben beschriebene Methode auch auf den Druckaufbau angewendet werden. Die Geschwindigkeiten der Druckerhöhung können nach regelungstechnischen Kriterien optimiert werden. Damit kann das Ziel erreicht werden, dass das Rad in unmittelbarer Nähe des Reibkraftmaximums gebremst wird und so optimale Bremswirkung bei optimaler Fahrstabilität erreicht wird.

Vorstehend wurden Spezialfälle der Regelung erwähnt, bei der eine Drosselwirkung vorteilhaft ist. Dies ist z.B. der Fall, wenn bei beiden Rädern gleichzeitig ein Druckabbau notwendig ist. Hier ist die Drosselwirkung vorteilhaft, bis der Stellkolben ein so großes Kammervolumen bereitgestellt hat, so dass von unterschiedlichem Druckniveau der dann anschließend schnelle Druckabbau in das Vakuum erfolgen kann. Ähnlich kann verfahren werden, d.h. wenn die Magnetventile im Ventilquerschnitt eine eingebaute Drossel haben und an beiden Radkreisen gleichzeitig Druckaufbau stattfinden soll. Der individuelle alternierende Druckaufbau ist jedoch zu bevorzugen wegen des dosierten Druckaufbaus mit Auswertung des Kennfeldes und geregelter Verstellgeschwindigkeit des Kolbens. Dasselbe alternierende Verfahren kann alternativ zu o.g. mit der Drosselwirkung für den Druckabbau angewandt werden. Als weitere Möglichkeit kann der Kolben bereits mit einem Regelsignal mit geringerer Ansprechschwelle als das Regelsignal für den Druckabbau zurückgefahren werden. Nach dem Stand der Technik ist dies das Signal, bei der der Regler eine Blockierneigung erkennt und das MV auf Druckhalten schaltet (siehe Bremsenhandbuch S. 52-53). Dieses Signal wird 5-10 ms vor dem Signal zum Druckabbau ausgegeben. Der vorgeschlagene schnelle Antrieb ist in der Lage, innerhalb von ca. 5ms ein Kammervolumen für 10 bar Druckabsenkung bereitzustellen.

Anhand der Kolbenstellung zum Druckabbau kann der Regler entscheiden, ob genügend Kammervolumen für den gleichzeitigen Druckabbau für beide Radbremsen bereit steht.

Diese Ausführungen zeigen, dass das Konzept mit dem schnellen und variabel geregelten elektromotorischen Kolbenantrieb und dem Magnetventil mit der Auswertung des Druckes und Kennfeldes ein hohes Potenzial für den Regler darstellt, was zusätzliche Bremswegverkürzungen und Fahrstabilität ermöglicht.

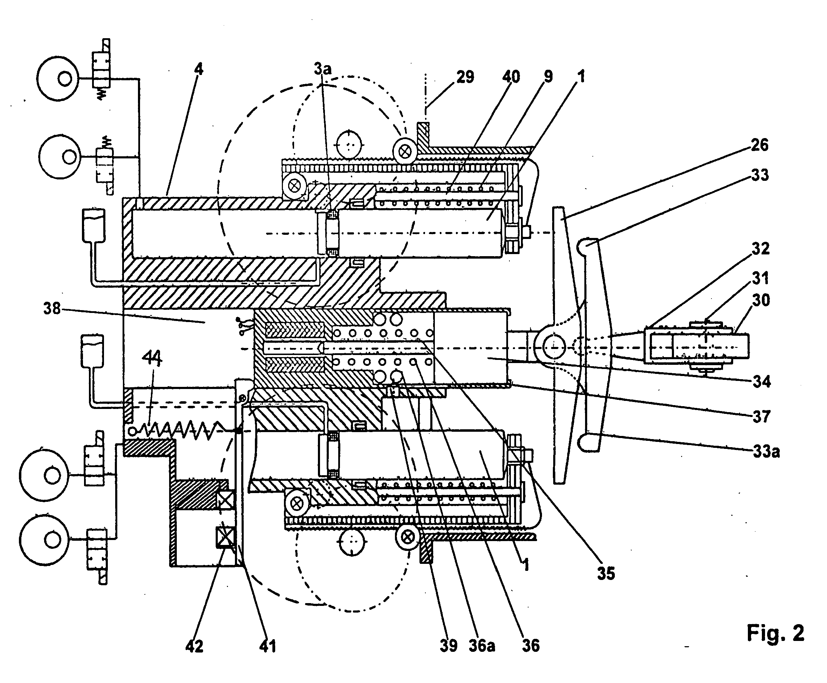

Die Fig. 2 zeigt die gesamte integrierte Einheit für BKV und Regelfunktionen. Die Einheit besteht aus zwei Kolbeneinheiten mit zugehörigem Elektromotoren und Getrieben gem. Fig. 1 für zwei Bremskreise und vier Radbremsen. Die Kolbeneinheiten sind im Gehäuse 4 untergebracht. Dieses Gehäuse ist an der Stirnwand 29 befestigt.

Das Bremspedal 30 überträgt die Pedalkraft und Bewegung über den Lagerbolzen 31 auf ein Gabelstück 32, welches über ein Kugelgelenk auf die Betätigungseinrichtung 33 wirkt. Diese hat einen zylinderförmigen Fortsatz 34 mit einer Stange 35.

Zylinder 34 und Stange 35 sind in einer Buchse 37 gelagert. Diese nimmt die Wegsimulatorfedern 36 und 36a auf, wobei eine Feder schwach und die andere Feder stark progressiv im Kraftanstieg wirkt. Der Wegsimulator kann auch aus noch mehr Federn oder Gummielementen aufgebaut sein. Dieser gibt die Pedalkraftcharakteristik vor. Der Pedalweg wird von einem Sensor 38 erfasst, welcher im gezeichneten Beispiel nach dem Wirbelstromprinzip aufgebaut ist, in den die Stange 35 mit einem Target eintaucht.

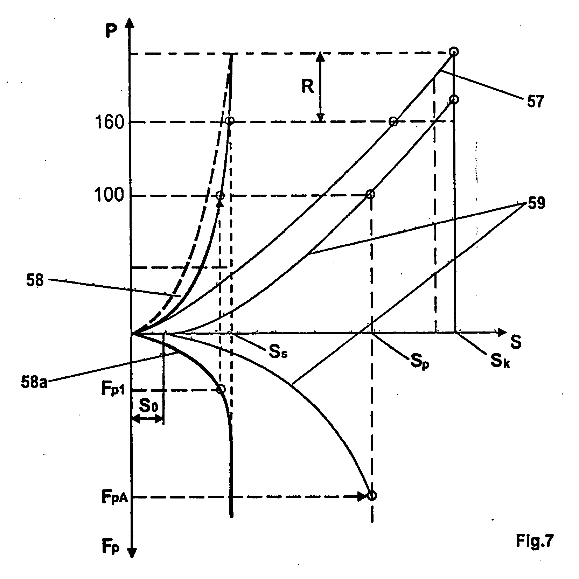

Die Pedalbewegung wird auf die Elemente 32 und 33 übertragen, der Kolben 34 bewegt sich mit der Stange 35 in der Buchse 37. An der Betätigungseinrichtung ist ein Hebel 26 drehbar gelagert, welcher bei Ausfall der Energieversorgung auf die Kolben trifft. Der Pedalwegsensor 38 liefert das Wegsignal zum elektronischen Steuergerät, welches entsprechend der BKV Kennlinie, wie sie in Fig. 7 beschrieben ist, eine Bewegung der Kolben über den Elektromotor bewirkt. Die Parameter dieser Kennlinie werden in Fig. 7 näher beschrieben. Zwischen dem Hebel 26 und den beiden Kolben 1 ist ein Spiel Sₒ vorgesehen, wie in Fig. 1 dargestellt. Die Betätigungseinrichtung hat über den Bolzen 39, der versetzt dargestellt ist, eine Verdrehsicherung und eine Rückstellfeder 40, welche die nicht gezeichnete Pedalrückstellfeder unterstützt. Nach dem Stand der Technik sind viele Wegsimulatorlösungen bekannt, welche auch teilweise hydraulisch über Kolben betätigt werden und über Magnetventile abgesperrt werden, wenn die Energieversorgung ausfällt. Diese Lösung ist aufwändig und hysteresebehaftet. Auch sind Lösungen bekannt, bei denen der Wegsimulatorweg bei Ausfall der Energieversorgung als Verlustweg eingeht bei Betätigung der Kolben zur Bremsdruckerzeugung.

Ziel der Erfindung ist eine einfache Lösung, bei der bei Ausfall der Energieversorgung der Wegsimulator ausgeschaltet wird. Zu diesem Zweck wird auf die Buchse 37 bei intakter Energieversorgung über den Ankerhebel 41 mit großem Übersetzungsverhältnis und den Haltemagneten 42 eine Gegenkraft ausgeübt, die entfällt, wenn die elektrische Energieversorgung ausfällt. Zur Reduzierung des Magneten können auch zweistufige Hebel eingesetzt werden. Im Einzelnen wird dies in Fig. 3 beschrieben. In diesem Fall kommt der Hebel über das Bremspedal mit den beiden Kolben nach Durchlaufen des Spiels so in Kontakt und kann somit die Pedalkraft auf die Kolben übertragen. Die Kolben sind so dimensioniert, dass sie bei vollem Pedalhub einen Druck erzeugen, welcher noch eine gute Bremswirkung ergibt, z. B. 80 %. Der Kolbenhub ist jedoch erheblich größer als der Pedalhub und kann bei intakter Energieversorgung und elektrischem Antrieb viel höhere Bremsdrücke erzeugen. Die entsprechende Pedalkraft kann jedoch der Fahrer nicht aufbringen. Man spricht bei dieser Auslegung von einem Übersetzungssprung, der mit Entkopplung der Betätigungseinheit mit Wegsimulator vom Kolben möglich ist. Bei konventioneller Bauweise, bei der BKV und Hauptbremszylinder mit Kolben hintereinander geschaltet sind, steigt die erforderliche Pedalkraft bei Ausfall der Energieversorgung bis zum Faktor 5 für denselben Radbremsdruck an. Bei der neuen Auslegung kann z. B. der Faktor auf 3 reduziert werden. Dieser Fall ist z. B. beim Abschleppen eines Fahrzeugs bei ausgefallener Batterie relevant.

Der Hebel 26 ist drehbar gelagert, damit er Toleranzen bei der Bewegung der Kolben berücksichtigen kann, z. B. infolge unterschiedlicher Entlüftung. Dieser Ausgleich kann auch begrenzt werden, so dass der Hebel auf einen Anschlag 33a der Betätigungseinrichtung zur Anlage kommt.

Es müssen jedoch noch weitere Fehlerfälle betrachtet werden.

### Ausfall eines Elektromotors.

In diesem Fall ist die Verstärkung und Regelung beim benachbarten intakten Kolbenantrieb voll wirksam. Über den Hebel 26 wird im ausgefallenen Kreis Bremsdruck erzeugt, nachdem er am Anschlag 33a anliegt. Hier kann zusätzlich noch die Verstärkerkennlinie des zweiten Kreises erhöht werden, was die erforderliche Pedalkraft reduziert. Dies kann jedoch auch ohne Anschlag erfolgen.

### Ausfall eines Bremskreises.

Hier fährt der Kolben auf Anschlag im Gehäuse 4. Der intakte zweite Kreis ist voll wirksam. Es entsteht nicht wie bei konventionellen heutigen Systemen ein durchfallendes Pedal, welches den Fahrer bekanntlich sehr irritiert. Die Irritation kann auch zu einem vollen Verlust der Bremswirkung führen, wenn er das Pedal nicht durchtritt.

Die Fig. 3 beschreibt die Funktion der Wegsimulatorarretierung. Im Grenzfall kann der Fahrer hohe Pedalkräfte aufbringen, was die Arretierung über den Ankerhebel 41 aufbringen muss. Um zu vermeiden, dass der Magnet 42 mit Erregerspule 43 diese Kräfte voll aufbringen muss, greift das obere ballige Ende 41a des Hebels asymmetrisch an der Buchse 37 an. Wird nun das Pedal bis zum Auftreffen der Stange 35 auf den Boden 37b ausgelenkt, so bewirkt diese Hebelwirkung eine leichte Verdrehung der Buchse 37, was Reibung in der Führung erzeugt, wobei zusätzlich die Nase 37a sich am Gehäuse 4 abstützen kann. Somit kann die Magnetkraft relativ klein gehalten werden. Der Magnet wird außerdem als Haftmagnet 42 ausgelegt, so dass infolge des kleinen Luftspaltes eine kleine Halteleistung notwendig ist. Bei Ausfall der Energieversorgung wird der Ankerhebel 41 von der Buchse 37 in die strichpunktierte Position 41' ausgelenkt. Wenn die Betätigungseinrichtung 33 wieder in die Ausgangsstellung zurückgeht, bringt die Rückstellfeder 44 den Ankerhebel wieder in Ausgangsstellung.

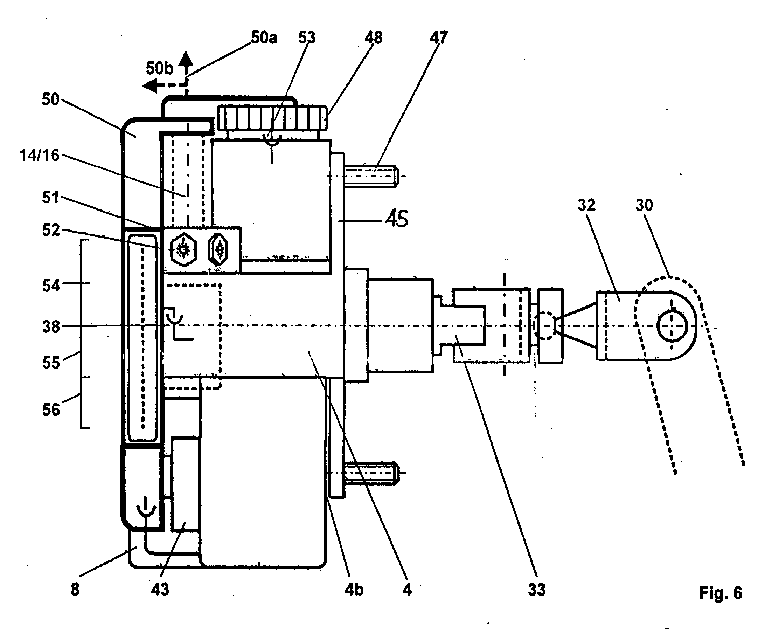

Der Sensor 38 wurde an das Ende der Bohrung der Buchse im Gehäuse 4 versetzt, was Vorteile für die Kontaktierung mit dem el. Steuergerät hat, wie dies in Fig. 6 dargestellt ist. Dasselbe gilt für den Bremslichtschalter 46. In diesem Ausführungsbeispiel ist das Target 45 für den Wirbelstromsensor gezeichnet.

Die Arretierung des Wegsimulators über die Buchse 37 kann verändert werden, um die in Fig. 7 beschriebene Pedalrückwirkung bei ABS zu vermeiden. Hierzu kann der Hebel 41 mit seiner Lagerung und Magnet 42 mit Aufnahme 42a über einen Elektromotor 60 bewegt werden, der eine Spindel 60a über ein Getriebe 60b antreibt. An der Verlängerung der Spindel ist der Hebel gelagert und das Magnetgehäuse befestigt.

Die Fig. 4 zeigt eine prinzipielle Darstellung einer Lösung mit nur einem E-Motor 7a. Diese Beschreibung baut auf Fig. 1 und Fig. 2 auf. Das Antriebsritzel des Motors bewegt die Zahnstange 5c, welche ähnlich Fig. 1 auch parallel versetzt werden kann. Diese ist mit einem Kolben 1a verbunden, welcher Druck im Bremskreis 13a aufbaut und zugleich über den Druck den Kolben 1a verschiebt, der im Bremskreis 13 Druck aufbaut. Diese Kolbenanordnung entspricht einem konventionellen Hauptbremszylinder für dessen Kolben und Dichtungsausführungen viele Varianten existieren. In den Bremskreisen sind wie bei den vorstehenden Figuren die 2/2-Wege-Magnetventile 14, 14a, 15, 15a angeordnet. Die ABS Druckmodulation erfolgt in der zuvor beschriebenen Weise. Die BKV-Funktion erfolgt über einen parallel angeordneten Wegsimulation 36 und Wegsensor 38. Auch hier ist zwischen Kolben 1a und Bremspedal ein Spiel oder Leerhub s₀ vorgesehen. Die Bremsflüssigkeit gelangt vom Vorratsbehälter 18, 18a in die Kolbenkammern. Diese Anordnung ist kostengünstig. Die Dynamik der BKV-Funktion im Druckaufbau ist geringer als bei der Variante mit zwei Motoren, da der E-Motor das doppelte Moment aufbringen muss. Es entfällt außerdem die Redundanzfunktion des 2. Motors wie sie in Fig. 6 beschrieben ist, einschließlich eines durchfallenden Pedals bei Bremskreisausfall.

Im Primär-Bremskreis 13a ist ein Druckgeber 73b angeordnet. Dieser misst den entsprechenden Bremsdruck. Da der Druck dieses Kreises über den Kolben 1b auch auf den Sekundär-Bremskreis 13 wirkt, kann dieser Druckgeber 73b bei der Modulation beide Bremskreise erfassen, da bei der Druckmodulation für die ABS-Funktion jede Radbremse über die 2/2-Magnetventils 14, 14a, 15, 15a individuell geregelt werden kann. Damit kann sowohl der Druck als auch der Druckabbau jeder Radbremse gemessen werden.

In Fig. 4a besitzt jeder Bremskreis 13, 13a einen eigenen Antrieb 7a, 7b für die entsprechenden Druckmodulationskolben 1a und 1b. Im Unterschied zur Fig. 2 besitzt der Antrieb 7b keine Verbindung zum Bremspedal 30. Vorzugsweise sind beide Antriebe parallel angeordnet damit eine kurze Baulänge erzielt werden kann. Der Vorteil dieser Anordnung liegt neben der kurzen Baulänge im einfacheren Aufbau und in der Modularität. Hierbei wird davon ausgegangen, dass für Kleinwagen bis zur gehobenen Mittelklasse das System entsprechend Fig. 4 eingesetzt wird und nur bei schweren Fahrzeugen ein einzelner Antriebsmotor nicht mehr genügt und deshalb in zwei Antriebe aufgeteilt wird. Abhängig von den Anforderungen kann in jedem Bremskreis vor den Magnetventilen ein Druckgeber eingesetzt werden.

Die Fig. 5 zeigt die Ansicht von der Stirnwand auf die integrierte Baueinheit, deren Flansch 4b mittels Schrauben 47 mit der Stirnwand verschraubt ist. Zu sehen sind hier die Betätigungseinheit 33, Hebel 26 und ein nicht versetzt gezeichneter Bolzen 39 als Verdrehsicherung. Zum Größenvergleich ist hier die Umrisskontur eines 10"-Vakuum-BKV eingezeichnet. Hier zeigt sich ein wichtiger Vorteil in der Bauhöhe mit dem Deckel 48 des Vorratsbehälters. Entsprechend dem Abstand A könnte die Stirnwand abgesenkt werden, was die Designer wünschen. Auf der linken Seite des Flansches ist, mit Hinweis auf Fig. 5a, gestrichelt der Antrieb der Zahnstange 5 gezeichnet. Dieses Detail ist vergrößert als Fig. 5a auf der rechten Bildhälfte dargestellt. Das Ritzel des Zahnrades 6 greift auf beiden Seiten in die H-förmige Gestaltung der Zahnstange 5. Die beschriebenen Querkräfte werden von der Rolle 10 bzw. 11 entsprechend Fig. 1 mit Lagerung 10a abgestützt. Aus Kostengründen kann die Zahnstange aus Kunststoff hergestellt werden. Da dessen Flächenpressung nicht ausreicht, werden hier harte Blechstreifen 49 eingelegt, die sich bei leicht balliger Ausbildung der Auflage an die Rollen anpassen. In das Ritzel 6 ist das Getrieberad 7 eingepresst, welches mit dem Motorritzel im Eingriff ist. Vorzugsweise ist das Ritzel im Motorgehäuse 8a gelagert.

Die Fig. 6 zeigt die Seitenansicht der integrierten Baueinheit mit Gehäuse 4, Gabelstück 32 für Bremspedal 30, Betätigungseinheit 33, Flansch 45, Befestigungsschrauben 47, Deckel 48. Diese Ansicht zeigt die kurze Baulänge, bei der auf der Vorderseite das elektronische Steuergerät 50 angebracht ist. Dieses ist nach dem Stand der Technik mit den Spulen bzw. einem Teil des Magnetkreises der Magnetventile 14 u. 16 verbunden, um zusätzlich Kontaktierungs- und elektrische Verbindungsleitungen einzusparen. Dieses Merkmal kann erweitert werden, indem alle elektrischen Komponenten wie Elektromotor 8, Magnetspule 43, Wegsensor 38, Bremslichtschalter 46, Bremsflüssigkeitsniveaugeber 53 direkt mit dem Steuergerät ohne elektrische Verbindungsleitungen kontaktiert werden. In diesem Fall müsste das Steuergerät von oben Richtung 50a eingebaut werden. Es ist jedoch auch in Richtung 50b möglich, was eine geänderte Anordnung der Magnetspule zur Folge hat.

Die Magnetventile werden vorzugsweise auf einer Trägerplatte 51 befestigt, da diese aus Kostengründen in Aluminium mit hoher Bruchdehnung eingepresst werden. In diese Trägerplatte werden die Verschlussschrauben 52 für die Bremsleitungen eingeschraubt. Im mittleren Teil des Steuergerätes ist die Kontaktierung eingezeichnet, welche im Bereich 54 eine redundante Stromversorgung, im Bereich 55 die Busleitung, bei 56 die Sensoren für ABS und ESP beinhaltet.

Die Fig. 7 zeigt die wesentlichen Kennlinien des Bremssystems. Dargestellt sind Pedalkraft F_{P}, Bremskraftdruck p und Pedalwegs an der Betätigungseinheit. Üblicherweise wird von hier zum Pedalfuß eine Übersetzung von 4 bis 5 gewählt. Der Pedalweg hat sein Maximum bei S_{P} und die Kolben, wie bereits erwähnt, bei einem höheren Wert s_{K}. Mit 57 ist die sog. Druck-Weg-Kennlinie dargestellt, welche hier z. B. einem Bremskreis entspricht. Der nicht lineare Verlauf resultiert aus verschiedenen Elastizitäten wie denen von Bremssattel, Dichtungen, Leitungen, Restlufteinschlüssen und Kompressibilität der Flüssigkeit. Diese Linie zeigt den Mittelwert eines Streubandes, das auch temperaturabhängig ist, insbesondere beim Bremssattel. Daher muss für die stromproportionale Drucksteuerung ein Kennfeld angelegt werden.

Die Kennlinien 59 zeigen den Ausfall des elektrischen Antriebs, bei dem nach dem Spiel S₀ die Kolben betätigt werden. Zur Erreichung von z.B. 100 bar sind hier die beschriebenen erheblich höheren Pedalkräfte F_{PA} von ca. 600 N notwendig, was einer mehr als 40% geringeren Pedalkraft gegenüber den heutigen Lösungen entspricht.

Aus der Pedalstellung und dem Bremsdruck ist erkennbar, dass die Druckmodulation von 10 bar bei Blockierdrücken > 50 bar nicht auf das Pedal rückwirkt, da das Pedal bei S_{S} auf die Arretierung stößt. Bei kleineren Blockierdrücken erfolgt bei Druckabsenkung und Aufbau eine Rückwirkung auf das Pedal, wenn das Pedal voll durchgetreten ist, und ist damit vergleichbar mit heutigen Systemen ESP und ABS. Es ist jedoch möglich, die Rückwirkung zu reduzieren oder zu vermeiden durch Einsatz eines in Fig. 4 beschriebenen Elektromotors 60, der die Arretierung des Wegsimulators über einen Antrieb verstellt. Über den Kolbenantrieb 6 wird zur Druckabsenkung das Pedal zurückbewegt. Zu diesem Zeitpunkt verstellt der Motor den Antrieb mit kleiner Kraft. Damit ist auch eine Pedalbewegung zur Warnung des Fahrers möglich, z. B. bei Stau oder ähnlichem. Auch ohne diesen zusätzlichen Motor ist eine Rückwirkung möglich, wenn die Pedalbewegung größer als das Spiel Sₒ ist und die Kolben zur Warnung kurzzeitig zurückgefahren werden.

Die dickeren Linien sind die Verstärkerlinien 58 und 58a, welche die Zuordnung von Pedalkraft F_{P} zum Bremsdruck zeigt. Bei ca. 50 % des maximalen Pedalweges ist der Wegsimulator bei S_{S} voll ausgesteuert. Dies hat den Vorteil, dass eine Vollbremsung mit kurzem Pedalweg möglich ist. Der Pedalweg wird dabei vom Sensor 38 erfasst. Die Zuordnung des Druckes zur Pedalkraft ist frei variabel und kann z. B. in der gestichelten Linie die Fahrzeugverzögerung mitberücksichtigen, indem diese als Korrekturwert in die Verstärkung eingeht, so dass bei Fading der Bremse bei derselben Pedalkraft ein höherer Druck eingesteuert wird. Diese Korrektur ist auch bei Systemen mit Rekuperation der Bremsenergie über den Generator notwendig, da die Bremswirkung des Generators berücksichtigt werden muss. Ähnliches gilt bei einer Panikbremsung mit hoher Pedalgeschwindigkeit. Hier kann überproportional zur Pedalkraft ein viel höherer Druck eingespeist werden, der mit einem Zeitverzug wieder der gezeigten statischen Kennlinie folgt (ausgezogene Linie).

Bei F_{P1} wird in der Regel eine Fußkraft von 200 N für den Bremsdruck von 100 bar festgelegt. Dieser Druck entspricht der Blockiergrenze bei trockener Straße. In diesem Bereich ist die Wegsimulatorkennlinie fast linear, damit eine gute Dosierbarkeit gewährleistet ist. In der Regel genügt ein Maximaldruck von 160 bar, nach dem die Dauerstandfestigkeit der Elemente dimensioniert wird. Für seltene Beanspruchungen kann jedoch eine Reserve R vorgehalten werden, die z.B. wirksam werden kann, wenn bei 160 bar noch nicht die Blockiergrenze erreicht ist.

Der elektrische Antrieb kann für den Fall des Ausfalls der Energieversorgung als ausfallsicherer als der Vakuum-BKV angesehen werden, da für die vorgeschlagene Erfindung mindestens zwei Elektromotorenantriebe eingesetzt werden, d.h. einer redundant wirkt und bekanntlich als Gesamtausfallrate λ_{g} = λ₁ · λ₂ gilt. Ein Ausfall der Energieversorgung während der Fahrt ist nahezu auszuschließen, da Generator und Batterie gleichzeitig praktisch nicht ausfallen. Einem Bruch der elektrischen Stromversorgung wird durch die in Fig. 6 beschriebene redundante Stromversorgung vorgebeugt. Der Vakuum-BKV ist mit Verstärkerelementen, Zuleitungen und ggf. Pumpe nicht redundant.

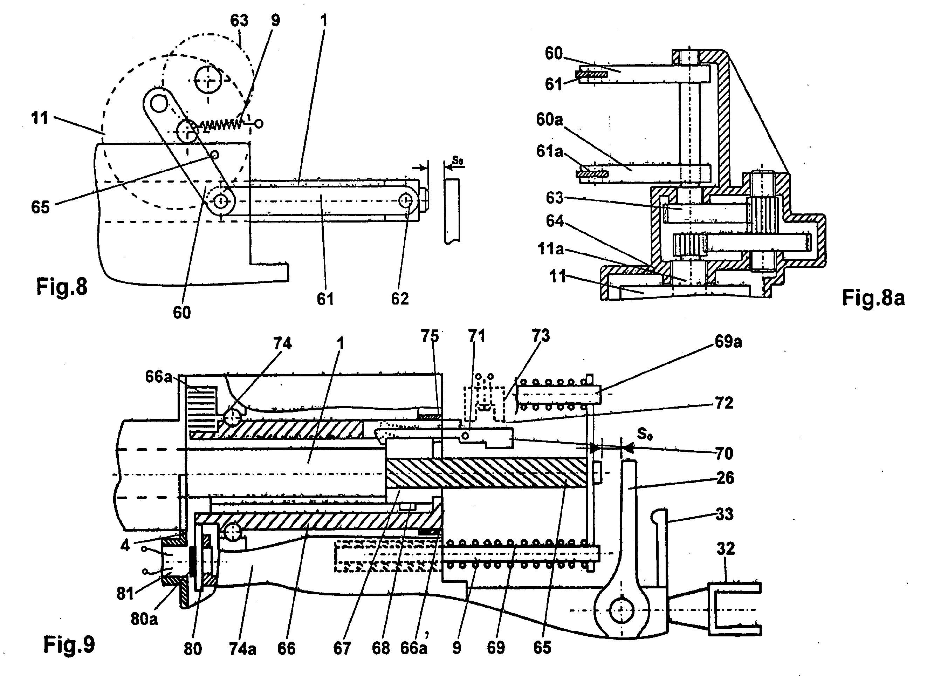

Die Fig. 8 zeigt eine weitere Lösung des Kolbenantriebes. Anstelle der Zahnstange kann eine Kurbelschwinge 60 eingesetzt werden, welche über eine Zugstrebe 61 über den Lagerbolzen 62 mit dem Kolben verbunden ist. Die Rückstellfeder 9 wirkt auf die Kurbelschwinge, deren Ausgangsstellung durch den Anschlag 65 gegeben ist. Die Kurbelschwinge wird über ein mehrstufiges Getriebe 63 vom Motor 11 angetrieben.

Die Fig. 8a zeigt eine zweiarmige Kurbelschwinge 60 und 60a mit zwei Zugstreben 61 und 61a. Damit wirken auf den Kolben nur geringe Querkräfte. Das Getriebe 63 ist hier gekapselt in einem erweiterten Motorgehäuse 64 und wird von dem Antriebsritzel 11a des Motors 11 angetrieben. Der Vorteil dieser Lösung liegt in der Kapselung des Getriebes, was Öl- oder Fettfüllung ermöglicht, Schrägverzahnung zulässt und damit höher belastbar und geräuschärmer ist.

Die Fig. 9 zeigt eine weitere Alternative mit einem Spindelantrieb, welcher innerhalb des Rotors des Elektromotors angeordnet ist. Diese Anordnung ist aus der DE 195 11 287 B4 bekannt, die sich auf elektromechanisch betätigte Scheibenbremse bezieht. Bei der vorgestellten Lösung befindet sich die Mutter 67 als getrenntes Bauelement in der Bohrung des Rotors 66 und stützt sich auf den Flansch 66a' des Rotors ab. Auf diesen wirken die Druckkräfte des Kolbens 1. Der Spindelantrieb wirkt zusätzlich als Untersetzungsgetriebe, wobei die Spindel 65 die Kraft auf den Kolben überträgt. Alle bisher gezeigten Antriebe haben ein fest mit dem Kolben gekoppeltes Untersetzungsgetriebe, welches bei Ausfall der Energieversorgung vom Bremspedal bewegt und bei schneller Pedalbetätigung mit Motor beschleunigt werden muss. Diese Massenträgheitskräfte verhindern eine schnelle Pedalbetätigung und irritieren den Fahrer. Um dies zu vermeiden, ist die Mutter in der Bohrung des Rotors axial beweglich, so dass bei Pedaleingriff der Kugelgewindetrieb ausgeschaltet ist. Die Mutter ist für den Normalbetrieb mit Elektromotor von einem Hebel 70 fixiert, welcher wirksam ist bei schneller Zurückstellung des Kolbens, insbesondere, wenn in der Kolbenkammer Vakuum herrscht. Dieser Hebel ist über die Welle 71 im Rotor gelagert und wird bei nicht drehendem Motor über die Feder 72 in eine Stellung bewegt, bei der die Mutter frei ist. Da der Antriebsmotor extrem schnell beschleunigt, wirkt hierbei die Fliehkraft auf den Hebel, und die Mutter ist für die Bewegung des Kolbens vom Hebel umschlossen.

Diese Bewegung kann auch durch einen gestrichelt gezeichneten Elektromagneten, bei dem der Hebel einen Drehanker darstellt, bewerkstelligt werden. Das entsprechende Magnetjoch kann radial umlaufend (nicht vollständig dargestellt) oder auch axial als Topf in das Gehäuse des Motors integriert werden.

Das von der Mutter erzeugte Verdrehmoment auf die Spindel wird von zwei Lagerstiften 69 und 69a aufgefangen. Diese Stifte sind zugleich Träger der Rückstellfeder 9. Der Rotor ist vorzugsweise in einem Kugellager 74 gelagert, welches die Axialkräfte des Kolbens aufnimmt und in einem Gleitlager 75, was auch ebenfalls ein Wälzlager sein kann. Es ist ebenso möglich, das Wälzlager 74 auf der Seite der Spindelmutter und das Gleitlager auf der Seite des Druckmodulationskolbens anzuordnen.

Diese Lösung bedingt eine größere Baulänge, was im Vergleich mit Fig. 9 deutlich wird, da die Eintauchlänge der Spindel in die Mutter gleich dem Kolbenhub ist. Um diese Verlängerung klein zu halten, ist das Motorgehäuse 74a unmittelbar am Kolbengehäuse 4 angeflanscht. Dies hat zusätzlich den Vorteil der unterschiedlichen Materialauswahl von Motor und Kolbengehäuse.

Die Mutter 67 kann auch direkt mit dem Rotor 66 verbunden werden, z. B. durch Einspritzen. Für die erforderlichen Kräfte kann eine Kunststoffmutter mit kleinem Reibungskoeffizienten eingesetzt werden.

Bei Ausfall eines Motors oder der Energieversorgung wirkt das nicht gezeichnete Pedal auf das Gabelstück entsprechend Fig. 2 und über den Hebel 26 nach dem Leerweg so auf die Spindel 65 bzw. Kolben 1. Da ein Blockieren des Antriebes bei dieser Lösung auszuschalten ist, kann der Anschlag 33 einen kleineren Abstand zum Hebel haben. Dies hat den Vorteil, dass die Pedalkraft voll auf den Kolben wirkt, wenn z. B. ein Elektromotor ausfällt. Sobald sich der Hebel bei der Verdrehung auf das gegenüber liegende Ende abstützt, wirkt nur noch die halbe Pedalkraft auf den Kolben. In der konstruktiven Ausgestaltung sind Spindel und Kolben entkoppelt, was nicht getrennt ausgeführt wurde.

Von Bedeutung ist die Rückstellung des Kolbens in die Ausgangsposition. Fällt der Motor in einer Zwischenstellung aus, so kann die Kolbenrückstellfeder zusätzlich unterstützt werden durch eine Spiralfeder 66a, welche am Ende des Rotors 66 und dem Motorgehäuse 74 angeordnet und an diese angekoppelt ist. Diese soll das Rast- und Reibungsmoment des Motors ausgleichen. Dies ist besonders vorteilhaft für kleine Rückstellkräfte der Kolben, die bei Ausfall der Energieversorgung auf das Pedal wirken in Verbindung mit dem in Fig. 9 beschriebenem Kupplungshebel.

Wie bereits erwähnt, benötigt der EC-Motor zur Regelung der Kolbenstellung und auch zur Einschaltung der Spulenstränge einen Winkelsensor. EC-Motoren zum Spindelantrieb verwenden vorzugsweise Segmentgeber, die auf dem Umfang verteilt die einzelnen Winkelelemente abtasten. Diese Lösung ist relativ aufwendig. Es wird daher vorgeschlagen, dass der Rotor 66 ein Zahnrad 80 antreibt, welches im Motorgehäuse 74a gelagert ist. Das Zahnrad besitzt auf seiner Stirnseite 80a ein Target, vorzugsweise ein entsprechend polarisierten Dauermagnet, welcher auf das Sensorelement 81 einwirkt und ein zum Drehwinkel proportionales Signal erzeugt. Dieses Sensorelement ist vorzugsweise ein Hallsensor. Dieser Aufbau ist einfach und lässt sich einfach auch redundant ausführen.

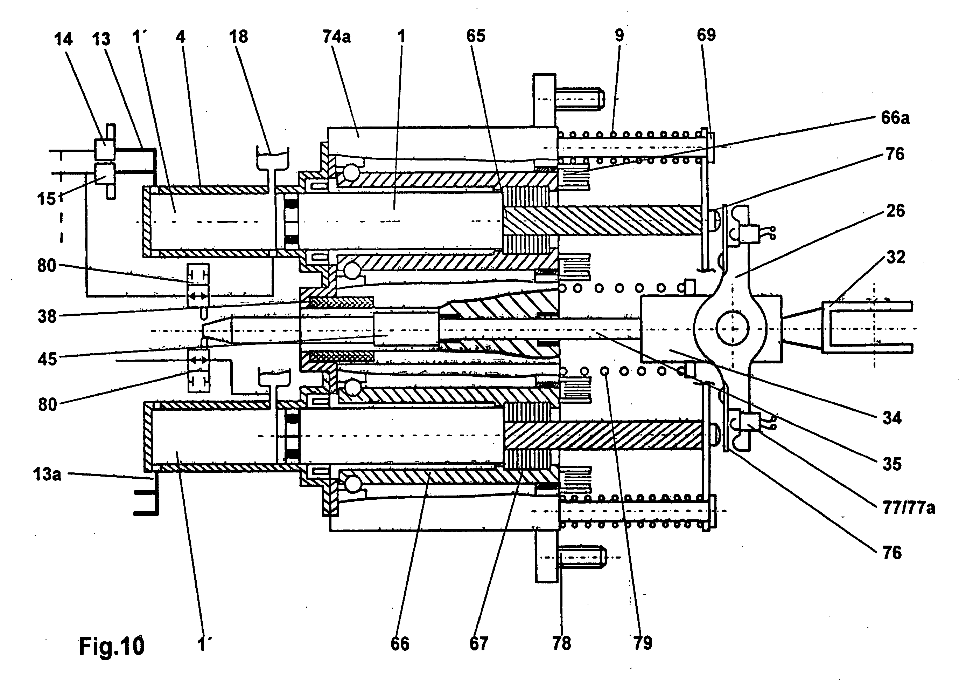

Die Fig. 10 zeigt eine weitere vereinfachte Ausführung mit einem elektromotorischen Kolbenantrieb, bei dem wiederum der Kolben 1 die Bremskraftverstärkung und Druckmodulation für ABS durchführt. Die Kolbenkammern 1' sind entsprechend der Figuren 1 bis 9 über Leitungen 13 und 13a mit den Radbremsen (nicht dargestellt) und mit den ebenfalls nicht dargestellten Magnetventilen verbunden. Der Aufbau entspricht Fig. 8 mit Spindelantrieb 65 und mit Rotor 66, fest verbundener Mutter 67, Trennung von Motor und Kolben, Gehäuse 74 bzw. 4, Kolbenrückstellfedern 9 und Lagerstift 69, Spiralfeder 66a zur Motorrückstellung. Die Pedalkraft wird ähnlich Fig. 2 von einem Gabelstück 26 auf eine Betätigungseinrichtung 34 mit Stange 35 übertragen. Diese ist im Motorgehäuse 74 gelagert und trägt in der Verlängerung ein Target 45 z.B. für einen Wirbelstromsensor 38, welcher den Pedalweg misst. Die Betätigungseinrichtung wird über eine Feder 79 zurückgestellt. An der Betätigungseinrichtung 35 ist wiederum ein Hebel 26 gelagert, welcher am Ende in der Verbindung zum Kolben vorzugsweise Blattfedern 76 trägt, welche bei einer starken Blattfeder mit einem Weggeber 77 oder bei einer weicheren Feder mit einem Kraftgeber 77a verbunden sind. In beiden Fällen soll hier die vom Hebel bzw. Pedal übertragene Kraft gemessen werden. Die Blattfeder 76 hat die Aufgabe bei Pedalbetätigung, eine harte Rückwirkung bevor der Motor losläuft zu vermeiden. Die Funktion erfolgt in der Weise, dass in einer bestimmten Funktion dieser Pedalkraft die Motoren eine verstärkende Kraft auf den Kolben ausüben, wobei diese Kraft wiederum aus Strom und Kolbenweg oder einem Druckgeber ermittelt werden kann. Hierbei kann der Pedalweg über den Wegsensor 38 in dieser Verstärkerfunktion bzw. Kennlinie mitverarbeitet werden. Dieser Sensor kann auch zu Beginn der Bremsung bei kleinen Drücken in Verbindung mit der Rückstellfeder 76 die Verstärkerfunktion übernehmen. Hier übernimmt die Feder 79 die Funktion der Wegsimulatorfeder.

Das Motorgehäuse besitzt einen Flansch zur Befestigung der Einheit über die Schraubenbolzen 78 in der Stirnwand. Dieses vereinfachte Konzept hat nicht den Aufwand des Wegsimulators und Arretierung. Nachteilig sind die eingeschränkte Pedalwegcharakteristik der Verstärkerkennlinie, ein Durchfallen des Pedals bei Bremskreisausfall und höhere Pedalkräfte bei Ausfall der Verstärkung, da Pedalweg und Kolbenweg identisch sind. Diese Ausführung ist vorwiegend für kleine Fahrzeuge geeignet.

Bei der Ausführungsform gem. Fig. 10 sind stellvertretend für alle Lösungen Sicherheitsventile 80 eingezeichnet, die wirksam werden, wenn z.B. ein Kolbenantrieb klemmt, wenn das Pedal in die Ausgangsstellung zurückgeht. Bei Pedalbewegung werden von einer konischen Verlängerung der Betätigungseinrichtung 35 mindestens zwei Sicherheitsventile 80 betätigt, welche die Verbindung vom Bremskreis 13 nach den Magnetventilen 14 und 15 bzw. vom Bremskreis 13a, 14a, 15a zum Rücklauf schließen. Die Magnetventilanordnung entspricht dabei der Figur 4. Vorzugsweise benötigt jeder Radkreis ein mechanisches Sicherheitsventil. Damit wird sichergestellt, dass bei Pedal in der Ausgangsstellung kein Bremsdruck im Bremskreis aufgebaut ist. Diese Ventile können auch elektromagnetisch betätigt sein.

Sicherheitsrelevante Systeme haben meistens eine getrennte Abschaltmöglichkeit für Fehler in den Endstufen, z.B. voller Stromfluss durch Durchlegierung. Für diesen Fall ist eine Abschaltmöglichkeit, z.B. durch ein herkömmliches Relais eingebaut. Der Diagnoseteil der elektrischen Schaltung erkennt diesen Fehler und schaltet das Relais ab, welches die Endstufen im Normalfall mit Strom versorgt. Auch bei den hier vorgeschlagenen Konzepten muss eine Abschaltmöglichkeit enthalten sein, welche durch ein Relais oder einen zentralen MOSFET realisiert ist.

In Anbetracht der Impulsansteuerung der Elektromotoren kann auch eine Schmelzsicherung eingesetzt werden, da das Puls-Aus-Verhältnis sehr groß ist.

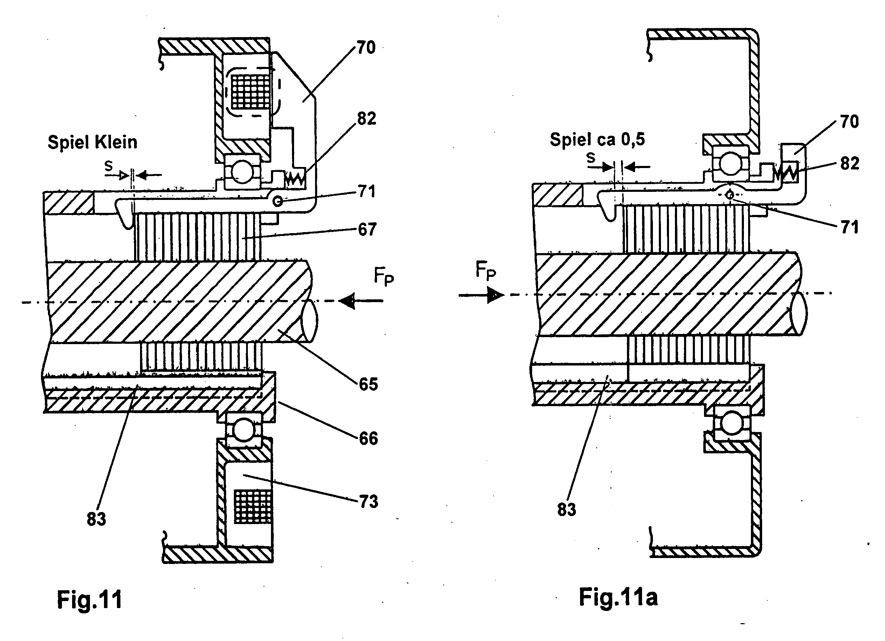

Die Figuren 11 und 11a zeigen im Detail die in Figur 9 angedeutete Fixierung der Spindelmutter 67. Der Hebel 70 ist vorzugsweise so gestaltet, dass die Fliehkraftkomponente die Magnetkraft unterstützt. Der Vorteil der magnetischen Betätigung liegt darin, dass bereits zu Beginn der Drehbewegung die Spindelmutter arretiert wird. Erfolgt nicht die Drehung, so wird der Magnet nicht eingeschaltet. Bei ausschließlicher Fliehkraftbetätigung muss zwischen Hebel und Spindelmutter ein Spiel vorgesehen werden, da der Hebel 70 bzw. der Rotor 66 eine entsprechende Winkelgeschwindigkeit zur Erzeugung der Fliehkraft erzeugen muss. Bei magnetischer Betätigung ist das Spiel s klein.

Die Darstellung zeigt die Vorteile der topfförmigen Ausführung des Magneten, welcher auf einer Stirnseite des Motors im Gehäuse integriert werden kann. Die Figur zeigt auch die Lagerung 71 des Hebels im Rotor 66. Der Hebel wird ohne eine von außen auf ihn einwirkende Kraft durch eine Rückstellfeder 82 auf einen nicht dargestellten Anschlag gedrückt. Bei Ausfall des Motorantriebes wirkt die Pedalkraft Fp auf die Spindel 65 und die Spindelmutter bewegt sich in der Bohrung des Rotors. Die Spindelmutter bewegt sich hier in einem Nutenstein 83, welcher bei funktionierendem Antrieb das Drehmoment vom Rotor auf die Spindelmutter überträgt.

Die Figur 11a zeigt eine Variante ohne Magnet 73 mit Lager 71 und Rückstellfeder 82 ausgebildet ist, um die entsprechende Fliehkraftkomponente zu erzeugen. Hier muss aus erwähnten Gründen das Spiel s größer gestaltet sein.

Der nicht dargestellte Aufbau des Motors ist der spätveroffentlichten DE 102005040389 zu entnehmen.

## Patentansprüche

1. Bremsanlage, eine Betätigungseinrichtung (30), insbesondere ein Bremspedal, und eine Steuer- und Regeleinrichtung aufweisend, wobei die Steuer- und Regeleinrichtung anhand der Bewegung und/oder Position der Betätigungseinrichtung (30) eine elektromotorische Antriebsvorrichtung (5c, 6, 7, 7a) steuert, wobei die Antriebsvorrichtung (5c, 6, 7, 7a) einen Kolben (1, 1a) eines Kolben-Zylinder-Systems über eine mit dem Kolben (1, 1a) fest gekoppelte, nicht-hydraulische Getriebevorrichtung verstellt, so dass sich im Arbeitsraum (4', 4a', 4b') des Zylinders ein Druck einstellt, wobei der Arbeitsraum (4', 4a', 4b') über eine Druckleitung (13) mit einer Radbremse in Verbindung ist, wobei in der Druckleitung (13) zu jeder Radbremse (15, 17) ein von der Steuer- und Regeleinrichtung (22) gesteuertes Ventil (14, 16) angeordnet ist, und bei Ausfall der Antriebsvorrichtung (5c, 6, 7, 7a) die Betätigungseinrichtung (30) den Kolben (1) oder die Antriebsvorrichtung (5c, 6, 7, 7a) verstellt, wobei die elektromotorische Antriebseinrichtung den Kolben (1) über einen Rotor (66) und einen als Untersetzungsgetriebe wirkenden Spindelantrieb verstellt, und dass der Kolben (1) die erforderliche Druckänderung für die Bremskraftverstärkung (BKV) und das Antiblockiersystem (ABS) erzeugt, wobei das Ventil (14, 16) nach Erreichen des erforderlichen Bremsdrucks im Bremszylinder (15, 17) schließt und auch im ABS-Betrieb sowohl zur Einstellung eines neuen niedrigeren, als auch neuen höheren Bremsdrucks geöffnet ist.

2. Bremsanlage nach Anspruch 1, **dadurch gekennzeichnet, dass** die Antriebsvorrichtung mindestens einen Elektromotor (8) mit insbesondere kleiner Zeitkonstante und/oder ein großes Beschleunigungsvermögen aufweist, wobei der Elektromotor (8) bei geschlossenem Ventil (14, 16) mit einem Erregerstrom bestromt wird, der dazu ausreicht, den Kolben (1) gegen die Federkraft in Position zu halten.

3. Bremsanlage nach Anspruch 1 oder 2, **dadurch gekennzeichnet, dass** der Arbeitsraum (4') über zwei oder mehr Druckleitungen (13) mit mehreren Bremszylindern (15, 17) in Verbindung ist, wobei jeweils ein Ventil (14, 16), insbesondere ein 2/2-Wegeventil, in jeder Druckleitung (13) angeordnet ist.

4. Bremsanlage nach einem der Ansprüche 1 bis 3, **dadurch gekennzeichnet, dass** das Kolben-Zylinder-System einen ersten und einen zweiten Kolben (1a, 1b) aufweist, welche in einem Zylinder axial verschieblich angeordnet sind, wobei der erste Kolben (1a) mechanisch mit der elektromotorischen Antriebsvorrichtung (7a, 6, 5c) und der zweite Kolben (1b) hydraulisch mit dem ersten Kolben (1a) gekoppelt ist, wobei die beiden Kolben (1a, 1b) zwischen sich einen Arbeitsraum (4a') bilden, der über mindestens eine Druckleitung (13a) mit mindestens einem Bremszylinder verbunden ist, und der zweite Kolben (1b) mit dem Zylinder einen zweiten Arbeitsraum (4b') bildet, der über mindestens eine weitere Druckleitung (13) mit mindestens einem weiteren Bremszylinder verbunden ist, wobei in den Druckleitungen (13, 13a) von der Steuer- und Regeleinrichtung gesteuerte Ventile 14, 15, 14a, 15a), insbesondere 2/2-Wegeventile, angeordnet sind.

5. Bremsanlage nach Anspruch 4, **dadurch gekennzeichnet, dass** die Bremsanlage einen Druckgeber bzw. Drucksensor (73b) zur Erfassung des Drucks in einem der beiden Bremskreise bzw. deren Druckleitungen (13, 13a), insbesondere im Primärbremskreis, aufweist.

6. Bremsanlage nach Anspruch 5, **dadurch gekennzeichnet, dass** die Steuereinrichtung den Druckgeber (73b) zur Einregelung der Bremsdrücke für beide Bremskreise verwendet.

7. Bremsanlage nach einem der vorhergehenden Ansprüche, **dadurch gekennzeichnet, dass** zwei Kolben-Zylinder-Systeme mit jeweils dazugehöriger Antriebsvorrichtung nebeneinander, insbesondere parallel zueinander angeordnet sind, wobei die Betätigungseinrichtung (30) direkt oder über zwischengeschaltete Mittel bei Ausfall mindestens einer Antriebsvorrichtung mindestens einen der beiden Kolben verstellt.

8. Bremsanlage nach Anspruch 7, **dadurch gekennzeichnet, dass** die Betätigungseinrichtung einen Hebel oder den Drehpunkt einer Wippe (26) parallel zum Verstellweg der Kolben (1) der Kolben-Zylinder-Systeme verstellt, und jedes freie Ende eines Arms der Wippe (26) jeweils einem Kolben (1) zugeordnet ist, und dass ein Begrenzungselement (33) den Verschwenkbereich der Wippe (26) begrenzt, wobei die Wippe (26) an einem Kolben (34) gelagert ist, welcher in einem Zylinder parallel zu den von den Antrieben angetriebenen Kolben (1) verschieblich gelagert ist, wobei der Kolben (34) mittels mindestens einer, insbesondere nichtlinearen Feder (36, 36a) in Richtung Bremspedal druckbeaufschlagt ist, und die Feder zusammen mit dem Kolben einen sog. Wegsimulator bildet, und ein Sensor die Position des Kolbens bestimmt, wobei der Kolbenhub des mit der Wippe (26) verbundenen Kolbens (34) durch einen Anschlag begrenzt ist, wobei der Anschlag über eine insbesondere elektromagnetische Stelleinrichtung abschaltbar ist.

9. Bremsanlage nach einem der vorhergehenden Ansprüche, **dadurch gekennzeichnet, dass** ein Kanal den Arbeitsraum (4') der Kolben-Zylindereinheit mit einem Reservoir (18) verbindet, wobei der Kolben (1) den Kanal (20) beim Einfahren in den Zylinder verschließt und der Kanal (20) in der Ausgangsstellung, d.h. lediglich bei fast oder vollständig zurückgefahrenem Kolben (1), geöffnet ist, wobei ein Absperrventil, insbesondere ein 2/2-Wegeventil (19) im Kanal (20) angeordnet ist.

10. Bremsanlage nach Anspruch 9, **dadurch gekennzeichnet, dass** die Dichtung des Kolbens bei schneller Rückstellung des Kolbens (1) aus dem Vorratsbehälter keine Flüssigkeit infolge Vakuum im Arbeitsraum (4', 4a', 4b') nachschnüffelt.

11. Bremsanlage nach einem der vorhergehenden Ansprüche, **dadurch gekennzeichnet, dass** die Steuer- und Regeleinrichtung einen Speicher hat, in dem ein Kennfeld mit verschiedenen Parametern zur Steuerung des Antriebs gespeichert ist.

12. Bremsanlage nach einem der vorhergehenden Ansprüche, **dadurch gekennzeichnet, dass** die Steuerung mittels mindestens eines Sensors, insbesondere eines Inkrementalgebers des Elektromotors die Kolbenposition ermittelt.

13. Bremsanlage nach einem der vorhergehenden Ansprüche, **dadurch gekennzeichnet, dass** der Antrieb den Kolben (1, 1a) aus dem Zylinder herausfährt, damit dieser mechanisch mit dem Bremspedal (30) in Verbindung kommt und eine Kraft auf das Bremspedal (30) ausübt.

14. Bremsanlage nach einem der vorhergehenden Ansprüche, **dadurch gekennzeichnet, dass** die Steuerung zur Erzeugung eines schnellen Druckabbaus in der Radbremse vor dem Öffnen des jeweiligen Ventils (14, 16) ein Unterdruck mittels des zugehörigen Kolbens (1, 1a) durch Vergrößern des Arbeitsraumes (4', 4a', 4b') erzeugt.

15. Bremsanlage nach einem der vorhergehenden Ansprüche, **dadurch gekennzeichnet, dass** die Steuer- und Regeleinrichtung zum Aufbau eines erhöhten Blockierdrucks vor dem Öffnen des jeweiligen Ventils (14, 16) den Elektromotor der Antriebsvorrichtung mit ca. 120% des im Regelzyklus vorausgegangenen Blockierdrucks bestromt.

16. Bremsanlage nach einem der vorhergehenden Ansprüche, **dadurch gekennzeichnet, dass** ein zusätzlicher Antrieb die Betätigungseinrichtung (30) verstellt, derart, dass im Normalbetrieb die Betätigungseinrichtung (30) nicht in mechanischer Verbindung zum Kolben (1) ist.

17. Bremsanlage nach einem der Ansprüche 8 bis 15, **dadurch gekennzeichnet, dass** ein zusätzlicher Antrieb den Anschlag des Wegsimulators verstellt, derart, dass im Normalbetrieb die Betätigungseinrichtung (30) nicht in mechanischer Verbindung zum Kolben (1) ist.

18. Bremsanlage nach Anspruch 16 oder 17, **dadurch gekennzeichnet, dass** der zusätzliche Antrieb auf den Wegsimulator wirkt, wobei bei einem niedrigem Blockierdruck der zusätzliche Antrieb den Wegsimulator während der Druckabsenkung in die Ausgangsstellung zurückbewegt, derart, dass die Betätigungseinrichtung mechanisch nicht mit dem Kolben (1) in Verbindung ist.

19. Bremsanlage nach einem der vorhergehenden Ansprüche, **dadurch gekennzeiehnet**, dass die Steuer- und Regeleinrichtung das Ventil (14, 16) zum schnellen Schließen vorerregt, so dass das Ventil (14, 16) durch eine kleine Erregungsverstärkung unmittelbar schließt.

20. Bremsanlage nach einem der vorhergehenden Ansprüche, **da** - **durch gekennzeichnet**, dass der Kolben (1) mittels des innerhalb von dem Rotor des Elektromotors angeordneten Spindelantriebes (65) angetrieben ist, wobei der Rotor (66) über eine axial im Rotor (66) verschieblich gelagerte Mutter (67) den Kolben (1) antreibt, wobei die Mutter (67) über einen insbesondere mittels Elektromagnet und/oder Fliehkraft betätigten Hebel bei Drehung des Rotors (66) in axialer Position gehalten ist, und bei Ausfall des elektrischen Antriebs die Spindel (65) mitsamt der Mutter (67) axial im Rotor (66) verschiebbar ist.

21. Bremsanlage nach Anspruch 20, **dadurch gekennzeichnet, dass** eine Verdrehsicherung der Spindel (65) über zwei Lagerstifte außerhalb des Kolbens (1), welche zugleich die Kolbenrückstellfedern aufnehmen, erfolgt.

22. Bremsanlage nach einem der Ansprüche 20 oder 21, **dadurch gekennzeichnet, dass** eine Drehfeder den Motor zurückstellt.

23. Bremsanlage nach einem der vorhergehenden Ansprüche, **dadurch gekennzeichnet, dass** die Bremsanlage eine zur Pedalkraft proportionale Verstärkung einregelt, wobei die Bremsanlage die Pedalkraft am Kolben ermittelt.

24. Bremsanlage nach Anspruch 8 oder nach Anspruch 8 in Verbindung mit einem der Ansprüche 9 bis 23, **dadurch gekennzeichnet, dass** zwischen der Betätigungseinrichtung und dem jeweiligen Kolben (1) ein Dämpfungselement angeordnet ist, und dass an der Wippe oder dem Dämpfungselement ein Kraft und/oder Wegsensor zur Pedalkraftmessung angeordnet ist.

25. Bremsanlage nach Anspruch 9 oder nach Anspruch 9 in Verbindung mit einem der Ansprüche 10 bis 24, **dadurch gekennzeichnet, dass** ein Kanal den Arbeitsraum (1') mit dem Reservoir verbindet, in dem ein Sicherheitsventil (80) angeordnet ist, welches im Falle eines klemmenden Kolbens öffnet und den Arbeitsraum (1') zum Druckabbau im Arbeitsraum mit dem Reservoir (18) verbindet.

26. Bremsanlage nach Anspruch 25, **dadurch gekennzeichnet, dass** das Sicherheitsventil ein mechanischhydraulisches oder ein elektromagnetisches Ventil ist.

27. Bremsanlage nach einem der vorhergehenden Ansprüche, **dadurch gekennzeichnet, dass** die Bremsanlage mehrere Bremskreise, insbesondere zwei Bremskreise, aufweist, wobei jeder Bremskreis Druckleitungen (13a, 13b) aufweist, in denen die gesteuerten Ventile (14, 14a, 15, 15a) angeordnet sind, und dass jeder Bremskreis einen Druckmodulationskolben (1, 1a) aufweist, der von einem eigenen Antrieb angetrieben ist, wobei nur ein Druckmodulationskolben (1) mechanisch mit dem Bremspedal (30) in Verbindung bringbar ist.

28. Bremsanlage nach einem der vorhergehenden Ansprüche, **dadurch gekennzeichnet, dass** die Bremsanlage mehrere Bremskreise, insbesondere zwei Bremskreise, aufweist, wobei jeder Bremskreis Druckleitungen (13a, 13b) aufweist, in denen die gesteuerten Ventile (14, 14a, 15, 15a) angeordnet sind, und dass mittels jeweils eines Druckgebers bzw. Drucksensors vor jedem Magnetventil (14, 16) eines jeden Bremskreises der Druck in der Bremsleitung (13a, 13b) ermittelbar ist.

29. Bremsanlage nach einem der vorhergehenden Ansprüche, **dadurch gekennzeichnet, dass** ein Rad, insbesondere Zahnrad, von dem Rotor (66) angetrieben ist, wobei das Rad ein Target trägt, das mit einem Drehwinkelgeber zur Erzeugung eines Drehwinkelsignals zusammenwirkt.

30. Bremsanlage nach Anspruch 29, **dadurch gekennzeichnet, dass** der Drehwinkelgeber ein Hall-Sensor ist.

31. Bremsanlage nach Anspruch 29 oder 30, **dadurch ge** - **kennzeichnet**, dass mehrere Drehwinkelgeber zur Ermittlung der Antriebs- und/oder Druckmodulationskolbenstellung angeordnet sind.

32. Bremsanlage nach Anspruch 1, **dadurch gekennzeichnet, dass** die Kolbengeschwindigkeit die Druckänderungsgeschwindigkeit bestimmt.

33. Verfahren unter Verwendung einer Bremsanlage nach einem der vorhergehenden Ansprüche, **dadurch gekennzeichnet, dass** bei Inbetriebnahme des Fahrzeugs oder während des Betriebs ein Kennfeld angelegt wird, in dem verschiedenen Motor-Stromstärken oder Drücke Positionen des Kolbens zugeordnet werden, wobei im Betrieb dann entsprechend einer Verstärkerkennlinie eine Position des Kolbens (1) angefahren wird, die entsprechend dem Kennfeld einem bestimmten Druck entspricht.

34. Verfahren nach Anspruch 33, **dadurch gekennzeichnet, dass** das Kennfeld im Betrieb bei einer festgestellten Abweichung von Position und Motormoment, adaptiert wird.

## Claims

1. Braking system, having an actuating device (30), in particular a brake pedal, and a control and regulating device, wherein the control and regulating device controls an electromotive drive device (5c, 6, 7, 7a) by means of the movement and/or position of the actuating device (30), wherein the drive device (5c, 6, 7, 7a) adjusts a piston (1, 1a) of a piston-cylinder system via a non-hydraulic transmission device firmly coupled to the piston (1, 1a), so that a pressure is set in the working chamber (4', 4a', 4b') of the cylinder, wherein the working chamber (4', 4a', 4b') is connected to a wheel brake via a pressure line (13), wherein a valve (14, 16) controlled by the control and regulating device (22) is arranged in the pressure line (13) to each wheel brake (15, 17), and in the event of failure of the drive device (5c, 6, 7, 7a) the actuating device (30) adjusts the piston (1) or the drive device (5c, 6, 7, 7a), wherein the electromotive drive device adjusts the piston (1) via a rotor (66) and a spindle drive acting as a reduction gear, and that the piston (1) produces the required change in pressure for the brake servo (BS) and the anti-lock braking system (ABS), wherein the valve (14, 16) closes after reaching the required brake pressure in the brake cylinder (15, 17) and is also opened in ABS operation both for setting a new lower brake pressure and a new higher brake pressure.

2. Braking system according to Claim 1, **characterised in that** the drive device has at least one electric motor (8) with a particularly low time constant and/or a great accelerating power, wherein the electric motor (8) is energised with an excitation current when the valve (14, 16) is closed, which is sufficient to hold the piston (1) in position against the spring force.

3. Braking system according to Claim 1 or 2, **characterised in that** the working chamber (4') is connected to a plurality of brake cylinders (15, 17) via two or more pressure lines (13), wherein in each case a valve (14, 16), in particular a 2/2 directional control valve, is arranged in each pressure line (13).

4. Braking system according to any one of Claims 1 to 3, **characterised in that** the piston-cylinder system has a first and a second piston (1a, 1b) which are axially movable in a cylinder, wherein the first piston (1a) is mechanically coupled to the electromotive drive device (7a, 6, 5c) and the second piston (1b) is hydraulically coupled to the first piston (1a), wherein the two pistons (1a, 1b) form a working chamber (4a') between them, which is connected to at least one brake cylinder via at least one pressure line (13a), and the second piston (1b) forms a second working chamber (4b') with the cylinder, which is connected to at least one further brake cylinder via at least one further pressure line (13), wherein valves (14, 15, 14a, 15a), in particular 2/2 directional control valves, controlled by the control and regulating device are arranged in the pressure lines (13, 13a).

5. Braking system according to Claim 4, **characterised in that** the braking system has a pressure transducer or pressure sensor (73b) for detecting the pressure in one of the two brakes circuits or their pressure lines (13, 13a), in particular in the primary brake circuit.

6. Braking system according to Claim 5, **characterised in that** the control device uses the pressure transducer (73b) for adjusting the brake pressures for both brake circuits.

7. Braking system according to any one of the preceding claims, **characterised in that** two piston-cylinder systems, each having an associated drive device, are arranged side by side, in particular parallel to each other, wherein the actuating device (30) directly or via interconnected means adjusts at least one of the two pistons in the event of failure of at least one drive device.

8. Braking system according to Claim 7, **characterised in that** the actuating device adjusts a lever or the pivot point of a rocker (26) parallel to the displacement path of the pistons (1) of the piston-cylinder systems, and each free end of an arm of the rocker (26) is respectively assigned to a piston (1), and **in that** a restricting element (33) restricts the pivot range of the rocker (26), wherein the rocker (26) is mounted on a piston (34) which is movably mounted in a cylinder parallel to the pistons (1) driven by the drives, wherein pressure is applied to the piston (34) in the direction of the brake pedal by means of at least one in particular non-linear spring (36, 36a), and the spring together with the piston forms a so-called pedal travel simulator, and a sensor determines the position of the piston, wherein the piston stroke of the piston (34) connected to the rocker (26) is restricted by a stop, wherein the stop can be deactivated via a regulating mechanism which in particular is electromagnetic.

9. Braking system according to any one of the preceding claims, **characterised in that** a channel connects the working chamber (4') of the piston-cylinder unit to a reservoir (18), wherein the piston (1) when it is moved into the cylinder closes off the channel (20) and the channel (20) is open in the initial position, i.e. only when the piston (1) is almost or fully moved back, wherein a stop valve, in particular a 2/2 direction control valve (19), is arranged in the channel (20).

10. Braking system according to Claim 9, **characterised in that** when the piston (1) is quickly returned the seal of the piston does not subsequently take in any fluid from the reservoir due to the vacuum in the working chamber (4', 4a', 4b').

11. Braking system according to any one of the preceding claims, **characterised in that** the control and regulating device has a memory, in which a characteristic map with various parameters for controlling the drive is stored.

12. Braking system according to any one of the preceding claims, **characterised in that** the controller determines the position of the piston by means of at least one sensor, in particular an incremental encoder of the electric motor.

13. Braking system according to any one of the preceding claims, **characterised in that** the drive moves the piston (1, 1a) out of the cylinder, so that the piston (1, 1a) mechanically comes into contact with the brake pedal (30) and exerts a force on the brake pedal (30).

14. Braking system according to any one of the preceding claims, **characterised in that** in order to produce a quick reduction in pressure in the wheel brake before opening the respective valve (14, 16) the controller creates an under pressure by means of the associated piston (1, 1a) by enlarging the working chamber (4', 4a', 4b')

15. Braking system according to any one of the preceding claims, **characterised in that** in order to build up an increased locking pressure before opening the respective valve (14, 16) the control and regulating device energises the electric motor of the drive device with approximately 120 % of the locking pressure which preceded in the control cycle.

16. Braking system according to any one of the preceding claims, **characterised in that** an additional drive adjusts the actuating device (30) in such a way that in normal operation the actuating device (30) is not in mechanical connection with the piston (1).

17. Braking system according to any one of Claims 8 to 15, **characterised in that** an additional drive adjusts the stop of the pedal travel simulator in such a way that in normal operation the actuating device (30) is not in mechanical connection with the piston (1).

18. Braking system according to Claim 16 or 17, **characterised in that** the additional drive acts on the pedal travel simulator, wherein in the case of a low locking pressure the additional drive moves the pedal travel simulator back into the initial position during the drop in pressure such that the actuating device is not in mechanical connection with the piston (1).

19. Braking system according to any one of the preceding claims, **characterised in that** the control and regulating device pre-excites the valve (14, 16) in order to close it quickly, so that the valve (14, 16) immediately closes due to a small excitation amplification.

20. Braking system according to any one of the preceding claims, **characterised in that** the piston (1) is driven by means of the spindle drive (65) arranged within the rotor of the electric motor, wherein the rotor (66) drives the piston (1) via a nut (67) which is mounted to be axially movable in the rotor (66), wherein the nut (67) is held in the axial position via a lever actuated in particular by means of an electromagnet and/or centrifugal force when the rotor (66) rotates, and in the event of failure of the electric drive the spindle (65) together with the nut (67) can be moved axially in the rotor (66).

21. Braking system according to Claim 20, **characterised in that** the spindle (65) is locked against rotation via two bearing pins outside of the piston (1) which at the same time accommodate the piston return springs.

22. Braking system according to either of Claims 20 and 21, **characterised in that** a torsion spring resets the motor.

23. Braking system according to any one of the preceding claims, **characterised in that** the braking system adjusts a boost proportional to the pedal force, wherein the braking system determines the pedal force at the piston.

24. Braking system according to Claim 8 or according to Claim 8 in conjunction with any one of Claims 9 to 23, **characterised in that** a damping element is arranged between the actuating device and the respective piston (1), and **in that** a force sensor and/or displacement sensor for measuring the pedal force is arranged on the rocker or the damping element.

25. Braking system according to Claim 9 or according to Claim 9 in conjunction with any one of Claims 10 to 24, **characterised in that** a channel connects the working chamber (1') to the reservoir, in which a safety valve (80) is arranged which opens in the event of a piston jamming and connects the working chamber (1') to the reservoir (18) in order to reduce the pressure in the working chamber (1').

26. Braking system according to Claim 25, **characterised in that** the safety valve is a mechanical-hydraulic or an electromagnetic valve.

27. Braking system according to any one of the preceding claims, **characterised in that** the braking system has a plurality of brake circuits, in particular two brake circuits, wherein each brake circuit has pressure lines (13a, 13b), in which the controlled valves (14, 14a, 15, 15a) are arranged, and **in that** each brake circuit has a pressure modulation piston (1, 1a) which is driven by a separate drive, wherein only one pressure modulation piston (1) can be mechanically connected to the brake pedal (30).

28. Braking system according to any one of the preceding claims, **characterised in that** the braking system has a plurality of brake circuits, in particular two brake circuits, wherein each brake circuit has pressure lines (13a, 13b), in which the controlled valves (14, 14a, 15, 15a) are arranged, and **in that** the pressure in the pressure line (13a, 13b) can be determined in each case by means of a pressure transducer or pressure sensor upstream of each solenoid valve (14, 16) of each brake circuit.

29. Braking system according to any one of the preceding claims, **characterised in that** a wheel, in particular a toothed wheel, is driven by the rotor (66), wherein the wheel carries a target which interacts with an angle of rotation sensor to generate an angle of rotation signal.

30. Braking system according to Claim 29, **characterised in that** the angle of rotation sensor is a Hall sensor.

31. Braking system according to Claim 29 or 30, **characterised in that** a plurality of angle of rotation sensors are arranged to determine the drive and/or pressure modulation piston position.

32. Braking system according to Claim 1, **characterised in that** the piston speed determines the rate of pressure change.

33. Method using a braking system according to any one of the preceding claims, **characterised in that** during initial start-up of the vehicle or during operation a characteristic map is created, in which positions of the piston are assigned to different motor amperages or pressures, wherein in operation corresponding to a booster characteristic curve a position of the piston (1) is then moved to, which in accordance with the characteristic map corresponds to a certain pressure.

34. Method according to Claim 33, **characterised in that** the characteristic map is adapted in operation in the case of a detected deviation of position and motor torque.

## Revendications

1. Installation de freinage, comprenant un dispositif d'actionnement (30), notamment une pédale de frein, et un dispositif de commande et de régulation, installation de freinage dans laquelle
le dispositif de commande et de régulation commande un dispositif d'entraînement à moteur électrique (5c, 6, 7, 7a) à l'aide du mouvement et/ou de la position du dispositif d'actionnement (30),
le dispositif d'entraînement (5c, 6, 7, 7a) déplace un piston (1, 1a) d'un système à piston-cylindre par l'intermédiaire d'un dispositif de transmission non hydraulique couplé de manière fixe au piston (1, 1a), de sorte qu'il s'établit une pression dans la chambre de travail (4', 4a', 4b') du cylindre,
la chambre de travail (4', 4a', 4b') est en liaison, via une conduite de pression (13), avec un frein de roue, dans la conduite de pression (13) vers chaque frein de roue (15, 17), est agencée une vanne (14, 16) commandée par le dispositif de commande et de régulation (22), et dans le cas d'une défaillance du dispositif d'entraînement (5c, 6, 7, 7a), le dispositif d'actionnement (30) déplace le piston (1) ou le dispositif d'entrainement (5c, 6, 7, 7a),
le dispositif d'entraînement à moteur électrique déplace le piston (1) par l'intermédiaire d'un rotor (66) et d'un entraînement à vis agissant en tant que réducteur, et le piston (1) engendre la variation de pression nécessaire pour l'amplification de force de freinage (BKV) et le système antiblocage (ABS),
la vanne (14, 16) ferme après que l'on ait atteint la pression de freinage nécessaire dans le cylindre de frein (15, 17), et est ouverte également en fonctionnement ABS, pour le réglage aussi bien d'une nouvelle pression de freinage plus basse, que d'une nouvelle pression de freinage plus élevée.

2. Installation de freinage selon la revendication 1, **caractérisée en ce que** le dispositif d'entraînement présente au moins un moteur électrique (8) avec notamment une faible constante de temps et/ou une capacité d'accélération élevée, le moteur électrique (8) étant, dans le cas d'une vanne (14, 16) fermée, alimenté en courant avec un courant d'excitation, qui est suffisant pour maintenir le piston (1) en position, à l'encontre de la force de ressort.

3. Installation de freinage selon la revendication 1 ou la revendication 2, **caractérisée en ce que** la chambre de travail (4') est en liaison, par l'intermédiaire de deux conduites de pression (13) ou davantage, avec plusieurs cylindres de frein (15, 17), une vanne (14, 16), notamment une vanne de distribution 2/2, étant agencée respectivement dans chaque conduite de pression (13).

4. Installation de freinage selon l'une des revendications 1 à 3, **caractérisée en ce que**
le système à piston-cylindre présente un premier piston et un deuxième piston (1a, 1b), qui sont agencés de manière axialement coulissante dans un cylindre,
le premier piston (1a) est couplé mécaniquement au dispositif d'entraînement à moteur électrique (7a, 6, 5c) et le deuxième piston (1b) hydrauliquement au premier piston (1a),
les deux pistons (1a, 1b) forment entre eux une chambre de travail (4a'), qui est reliée par l'intermédiaire d'au moins une conduite de pression (13a), à au moins un cylindre de frein, et le deuxième piston (1b) forme avec le cylindre une deuxième chambre de travail (4b'), qui est reliée par l'intermédiaire d'au moins une autre conduite de pression (13), à au moins un autre cylindre de frein, et
des vannes (14, 15, 14a, 15a), notamment des vannes de distribution 2/2, commandées par le dispositif de commande et de régulation, sont agencées dans les conduites de pression (13, 13a).

5. Installation de freinage selon la revendication 4, **caractérisée en ce que** l'installation de freinage présente un capteur de pression ou détecteur de pression (73b) destiné à relever la pression dans l'un des deux circuits de freinage, à savoir dans leurs conduites de pression (13, 13a), notamment dans le circuit primaire.

6. Installation de freinage selon la revendication 5, **caractérisée en ce que** le dispositif de commande utilise le capteur de pression (73b) pour réguler la pression de freinage pour les deux circuits de freinage.

7. Installation de freinage selon l'une des revendications précédentes, **caractérisée en ce que** deux systèmes à piston-cylindre avec un dispositif d'entraînement respectivement associé à chacun, sont agencés côte à côte, notamment parallèlement l'un à l'autre, le dispositif d'actionnement (30) déplaçant directement ou par l'intermédiaire de moyens intercalés, au moins l'un des deux pistons en cas de défaillance d'un dispositif d'entraînement.

8. Installation de freinage selon la revendication 7, **caractérisée en ce que**
le dispositif d'actionnement déplace un levier ou le point de rotation d'un basculeur (26) parallèlement au déplacement de réglage des pistons (1) des systèmes à piston-cylindre, et chaque extrémité libre d'un bras du basculeur (26) est associée respectivement à un piston (1), et un élément de limitation (33) limite le mouvement de pivotement du basculeur (26),
le basculeur (26) est monté sur un piston (34) qui est monté dans un cylindre de manière à pouvoir y coulisser parallèlement aux pistons (1) entraînés par les entraînements,
le piston (34) est sollicité en pression en direction de la pédale de frein au moyen d'au moins un ressort (36, 36a), notamment non linéaire, et le ressort forme, en commun avec le piston, un ensemble dit simulateur de déplacement, et un capteur détermine la position du piston,
la course de piston du piston (34) relié au basculeur (26) est limitée par une butée, et
la butée peut être désactivée par l'intermédiaire d'un dispositif de réglage, notamment électromagnétique.

9. Installation de freinage selon l'une des revendications précédentes, **caractérisée en ce que**
un canal relie la chambre de travail (4') de l'unité à piston-cylindre à un réservoir (18),
le piston (1) ferme le canal (20) lors de la rentrée dans le cylindre, et le canal (20) est ouvert dans la position initiale, c'est-à-dire uniquement pour un piston (1) presque ou totalement ramené en arrière, et
une vanne d'isolement, notamment une vanne de distribution 2/2 (19), est agencée dans le canal (20).

10. Installation de freinage selon la revendication 9, **caractérisée en ce que** le joint d'étanchéité du piston, lors du retour arrière rapide du piston (1), ne réaspire pas de liquide du réservoir, en raison du vide dans la chambre de travail (4', 4a', 4b').

11. Installation de freinage selon l'une des revendications précédentes, **caractérisée en ce que** le dispositif de commande et de régulation possède une mémoire dans laquelle est mémorisé un diagramme caractéristique avec différents paramètres pour la commande de l'entraînement.

12. Installation de freinage selon l'une des revendications précédentes, **caractérisée en ce que** la commande détermine la position du piston au moyen d'au moins un détecteur, notamment un capteur incrémental du moteur électrique.

13. Installation de freinage selon l'une des revendications précédentes, **caractérisée en ce que** l'entraînement fait sortir le piston (1, 1a) du cylindre, pour que celui-ci se mette en liaison mécanique avec la pédale de frein (30) et exerce une force sur la pédale de frein (30).

14. Installation de freinage selon l'une des revendications précédentes, **caractérisée en ce que** la commande, en vue de produire une chute ou dégradation de pression rapide dans le frein de roue, engendre une dépression avant l'ouverture de la vanne respective (14, 16), au moyen du piston (1, 1a) associé, par agrandissement de la chambre de travail (4', 4a', 4b').

15. Installation de freinage selon l'une des revendications précédentes, **caractérisée en ce que** le dispositif de commande et de régulation, en vue de l'établissement d'une pression de blocage accrue, alimente le moteur électrique du dispositif d'entraînement, avant l'ouverture de la vanne respective (14, 16), avec un courant correspondant environ à 120% de la pression de blocage précédente dans le cycle de régulation.

16. Installation de freinage selon l'une des revendications précédentes, **caractérisée en ce qu'**un entraînement supplémentaire déplace le dispositif d'actionnement (30), de façon telle qu'en fonctionnement normal, le dispositif d'actionnement (30) ne soit pas en liaison mécanique avec le piston (1).

17. Installation de freinage selon l'une des revendications 8 à 15, **caractérisée en ce qu'**un entraînement supplémentaire déplace la butée du simulateur de déplacement, de façon telle qu'en fonctionnement normal, le dispositif d'actionnement (30) ne soit pas en liaison mécanique avec le piston (1).

18. Installation de freinage selon la revendication 16 ou la revendication 17, **caractérisée en ce que** l'entraînement supplémentaire agit sur le simulateur de déplacement, cet entraînement supplémentaire, dans le cas d'une faible pression de blocage, déplaçant le simulateur de déplacement en retour dans la position initiale pendant la chute ou dégradation de pression, de manière telle que le dispositif d'actionnement ne soit pas en liaison mécanique avec le piston (1).

19. Installation de freinage selon l'une des revendications précédentes, **caractérisée en ce que** le dispositif de commande et de régulation excite de manière préalable la vanne (14, 16) pour la fermeture rapide, de sorte que la vanne (14, 16) ferme directement par une petite amplification d'excitation.

20. Installation de freinage selon l'une des revendications précédentes, **caractérisée en ce que**
le piston (1) est entraîné au moyen de l'entraînement à vis (65) agencé à l'intérieur du rotor du moteur électrique,
le rotor (66) entraîne le piston (1) par l'intermédiaire d'un écrou (67) monté de manière axialement coulissante dans le rotor (66), et
l'écrou (67) est maintenu dans sa position axiale lors de la rotation du rotor (66), par l'intermédiaire d'un levier, notamment actionné au moyen d'un électroaimant et/ou de la force centrifuge, et, en cas de défaillance de l'entraînement électrique, la vis (65), y compris l'écrou (67), peut coulisser axialement dans le rotor (66).

21. Installation de freinage selon la revendication 20, **caractérisée en ce qu'**un blocage en rotation relative de la vis (65) s'effectue par l'intermédiaire de deux broches de montage à l'extérieur du piston (1), qui reçoivent en même temps les ressorts de rappel du piston.

22. Installation de freinage selon l'une des revendications 20 ou 21, **caractérisée en ce qu'**un ressort de rotation à branches assure le rappel du moteur.

23. Installation de freinage selon l'une des revendications précédentes, **caractérisée en ce que** l'installation de freinage régule une amplification proportionnelle à la force de pédale, l'installation de freinage déterminant la force de pédale au niveau du piston.

24. Installation de freinage selon la revendication 8 ou la revendication 8 en combinaison avec l'une des revendications 9 à 23, **caractérisée en ce qu'**entre le dispositif d'actionnement et le piston respectif (1) est agencé un élément d'amortissement, et **en ce que** sur le basculeur ou l'élément d'amortissement est agencé un détecteur de force et/ou de déplacement pour mesurer la force de pédale.

25. Installation de freinage selon la revendication 9 ou la revendication 9 en combinaison avec l'une des revendications 10 à 24, **caractérisée en ce qu'**un canal relie la chambre de travail (1') au réservoir, et dans celui-ci est agencée une vanne de sécurité (80), qui ouvre dans le cas d'un coincement du piston, et relie la chambre de travail (1') au réservoir (18) pour assurer la chute ou la dégradation de pression dans la chambre de travail.

26. Installation de freinage selon la revendication 25, **caractérisée en ce que** la vanne de sécurité est une vanne mécanique-hydraulique ou une vanne électromagnétique ou électrovanne.

27. Installation de freinage selon l'une des revendications précédentes, **caractérisée en ce que** l'installation de freinage présente plusieurs circuits de freinage, notamment deux circuits de freinage, chaque circuit de freinage présentant des conduites de pression (13a, 13b) dans lesquelles sont agencées les vannes commandées (14, 14a, 15, 15a), et **en ce que** chaque circuit de freinage présente un piston de modulation de pression (1, 1a), qui est entraîné par un entraînement lui étant propre, seul un piston de modulation de pression (1) pouvant être mis mécaniquement en liaison avec la pédale de frein (30).

28. Installation de freinage selon l'une des revendications précédentes, **caractérisée en ce que** l'installation de freinage présente plusieurs circuits de freinage, notamment deux circuits de freinage, chaque circuit de freinage présentant des conduites de pression (13a, 13b) dans lesquelles sont agencées les vannes commandées (14, 14a, 15, 15a), et **en ce qu'**au moyen respectivement d'un capteur de pression ou détecteur de pression devant chaque électrovanne (14, 16) de chaque circuit de freinage, il est possible de déterminer la pression dans la conduite de frein (13a, 13b).

29. Installation de freinage selon l'une des revendications précédentes, **caractérisée en ce qu'**une roue, notamment une roue dentée, est entraînée par le rotor (66), la roue portant une cible qui coopère avec un capteur d'angle de rotation pour produire un signal d'angle de rotation.

30. Installation de freinage selon la revendication 29, **caractérisée en ce que** le capteur d'angle de rotation est un détecteur de hall.

31. Installation de freinage selon la revendication 29 ou la revendication 30, **caractérisée en ce que** plusieurs capteurs d'angle de rotation sont agencés pour déterminer la position d'entraînement et/ou la position de piston de modulation de pression.

32. Installation de freinage selon la revendication 1, **caractérisée en ce que** la vitesse de piston détermine la vitesse de variation de la pression.

33. Procédé mettant en oeuvre une installation de freinage selon l'une des revendications précédentes, **caractérisé en ce que** lors de la mise en service du véhicule ou pendant le fonctionnement, on applique un diagramme caractéristique dans lequel à différentes intensités du courant du moteur ou pressions sont affectées des positions du piston, et au cours du fonctionnement, on pilote alors conformément à une courbe caractéristique d'amplification, une position du piston (1), qui correspond, conformément au digramme caractéristique, à une pression déterminée.

34. Procédé selon la revendication 33, **caractérisé en ce que** l'on adapte le diagramme caractéristique en cours de fonctionnement, dans le cas où l'on constate un écart de la position et du couple moteur.
